# EUROPEAN PATENT APPLICATION

(11) **EP 4 692 146 A1**
(43) Date of publication of application: **11.02.2026**
(21) Application number: 24842961.5
(22) Date of filing: 04.07.2024
(51) Int. Cl.: C08F 290/06, C09K 3/00, G02B 5/30

(54) **LEVELING AGENT, RESIST COMPOSITION, AND POLARIZING PLATE**

(30) Priority: 18.07.2023 JP 2023116590
(71) Applicant: DIC Corporation, Tokyo 174-8520 (JP)
(72) Inventor: NOGUCHI, Jun, Ichihara-shi, Chiba 290-8585 (JP); UENO, Junpei, Ichihara-shi, Chiba 290-8585 (JP); OZAKI, Kyohei, Ichihara-shi, Chiba 290-8585 (JP); ONOZAWA, Hayato, Ichihara-shi, Chiba 290-8585 (JP)
(74) Representative: Kraus & Lederer PartGmbB
(86) International application number: PCT/JP2024/024250
(87) International publication number: WO 2025/018168

(57) **Abstract**

Provided is a leveling agent that can impart high smoothness to a coating film. A leveling agent is a silicone chain-containing polymer with at least a polymerizable monomer (a1) having a group containing a structure represented by General Formula (A) below (x indicates a number of repetition, with a number average of x being 20 or more) and a polymerizable monomer (a2) having one or more selected from the group consisting of a C₁₋₁₈ alkyl group, a C₆₋₁₈ aromatic group, a group containing a polyoxyalkylene chain, and a group containing a polyester chain as a polymeric component, a ratio of the polymerizable monomer (a1) in the polymeric component being greater than 20% by mass.

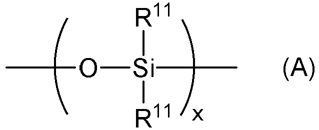

## Description

### Technical Field

The present invention relates to a leveling agent, a resist composition, and a polarizing plate.

### Background Art

Leveling agents are added in order to smooth coating films obtained by applying, for example, resist compositions. Leveling agents have a wide variety of uses and are also used for, for example, color resist compositions used for the production of color filters for use in liquid crystal displays. The manufacture of color filters generally includes steps of applying a color resist composition onto a glass substrate by a method of application such as spin coating or slit coating, exposing a coating film after being dried using a mask, and then performing development to form a colored pattern. In this case, if the coating film has poor smoothness or unevenness in film thickness, or if there is application unevenness, crawling, or the like, pixel color unevenness may occur. By adding the leveling agent to the color resist composition, the smoothness of the resulting coating film improves, and the surfaces of red (R), green (G), and blue (B) pixels and a black matrix (BM) formed between these pixels can show high smoothness, and a color filter with less color unevenness can be produced.

Fluorine-based leveling agents have been conventionally used as leveling agents, but the suspicion of environmental accumulation of fluorine-based compounds has prompted a rush to replace them with non-fluorine-based leveling agents. For example, silicone compounds have been developed as such non-fluorine-based leveling agents (for example, PTL 1).

### Citation List

### Patent Literature

PTL 1: Japanese Unexamined Patent Application Publication No. 2002-179991

### Summary of Invention

### Technical Problem

An object of the present invention is to provide a leveling agent that can impart high smoothness to a coating film, as well as a resist composition and a polarizing plate that can form a coating film with excellent smoothness containing the leveling agent.

### Solution to Problem

Specifically, the present invention relates to a leveling agent and the like.
1. A leveling agent that is a silicone chain-containing polymer with at least a polymerizable monomer (a1) having a group containing a structure represented by General Formula (A) below and a polymerizable monomer (a2) having one or more selected from the group consisting of a C₁₋₁₈ alkyl group, a C₆₋₁₈ aromatic group, a group containing a polyoxyalkylene chain, and a group containing a polyester chain as a polymeric component,
   a ratio of the polymerizable monomer (a1) in the polymeric component being greater than 20% by mass: 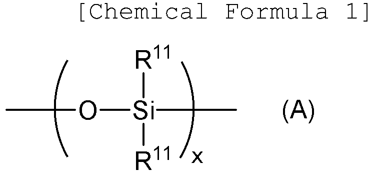
   in General Formula (A) above,
   R¹¹ are each independently a C₁₋₆ alkyl group, and
   x indicates a number of repetition, with a number average of x being 20 or more.
2. The leveling agent according to 1, in which the group containing a structure represented by General Formula (A) above is a group represented by General Formula (A1) below: 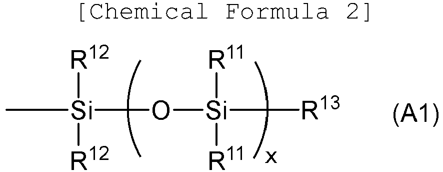
   in General Formula (A1) above,
   R¹¹ are each independently a C₁₋₆ alkyl group,
   R¹² are each independently a C₁₋₆ alkyl group,
   R¹³ is a C₁₋₆ alkyl group, and
   x indicates a number of repetition, with a number average of x being 20 or more.
3. The leveling agent according to 1 or 2, in which the polymerizable monomer (a1) is a compound represented by General Formula (a1-1) below: 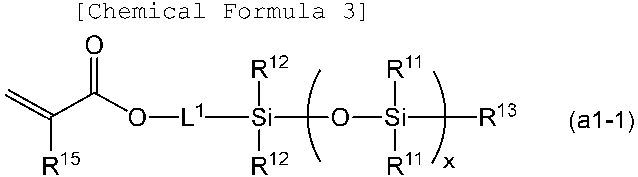
   in General Formula (a1-1) above,
   R¹¹ are each independently a C₁₋₆ alkyl group,
   R¹² are each independently a C₁₋₆ alkyl group,
   R¹³ is a C₁₋₆ alkyl group,
   x indicates a number of repetition, with a number average of x being 20 or more,
   R¹⁵ is a hydrogen atom or a methyl group, and
   L¹ is a divalent organic group.
4. The leveling agent according to any of 1 to 3, containing a polymerizable monomer having a group containing a polyoxyalkylene chain as the polymerizable monomer (a2).
5. The leveling agent according to any of 1 to 4, in which the polymerizable monomer (a2) is one or more selected from the group consisting of a compound represented by General Formula (a2-1) below, a compound represented by General Formula (a2-2) below, a compound represented by General Formula (a2-3) below, and a compound represented by General Formula (a2-4) below: 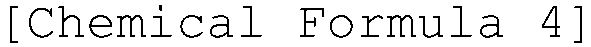 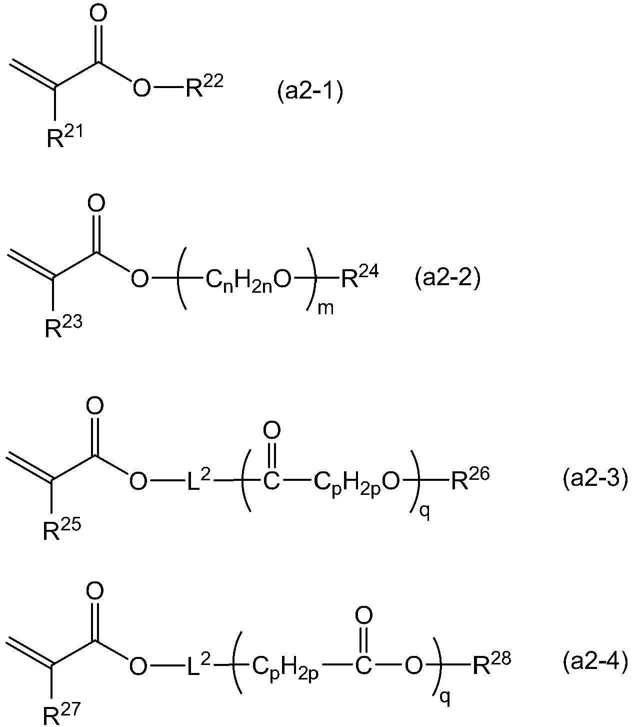
   in General Formulae (a2-1), (a2-2), (a2-3), and (a2-4) above,
   R²¹ is a hydrogen atom or a methyl group,
   R²² is a C₁₋₁₈ alkyl group,
   R²³ is a hydrogen atom or a methyl group,
   R²⁴ is a hydrogen atom or a C₁₋₁₈ alkyl group,
   R²⁵ is a hydrogen atom or a methyl group,
   R²⁶ is a hydrogen atom, a C₁₋₁₈ alkyl group, or a C₁₋₁₈ alkyl group having an ether bond,
   R²⁷ is a hydrogen atom or a methyl group,
   R²⁸ is a hydrogen atom, a C₁₋₁₈ alkyl group, or a C₁₋₁₈ alkyl group having an ether bond,
   L² is a divalent organic group or a single bond, and
   n is an integer in a range of 1 to 4, m indicates a number of repetition, with a number average of m being in a range of 1 to 200, p is an integer in a range of 1 to 10, and q indicates a number of repetition, with a number average of q being in a range of 1 to 100.
6. The leveling agent according to any of 1 to 5, in which a ratio of the polymerizable monomer (a1) in the polymeric component is in a range of 25 to 50% by mass.
7. The leveling agent according to any of 1 to 6, in which the polymerizable monomer (a1) and the polymerizable monomer (a2) amount to 80% by mass or more of the polymeric component.
8. The leveling agent according to any of 1 to 7, in which the silicone chain-containing polymer does not contain any fluorine atoms.
9. The leveling agent according to any of 1 to 8, in which a weight average molecular weight of the silicone chain-containing polymer is 15,000 or more.
10. A resist composition containing the leveling agent according to any of 1 to 9.
11. A polarizing plate containing the leveling agent according to any of 1 to 9.

### Advantageous Effects of Invention

The present invention can provide a leveling agent that can impart high smoothness to a coating film, as well as a resist composition and a polarizing plate that can form a coating film with excellent smoothness containing the leveling agent.

### Description of Embodiments

The following describes one embodiment of the present invention. The present invention is not limited to the following embodiment and may be implemented with changes added as appropriate to the extent that the effects of the present invention are not impaired.

In the specification of the present application, "(meth)acrylic acid" means one or both of acrylic acid and methacrylic acid.

### [Leveling Agent]

The leveling agent of the present invention is a silicone chain-containing polymer with at least a polymerizable monomer (a1) having a group containing a structure represented by General Formula (A) below and a polymerizable monomer (a2) having one or more selected from the group consisting of a C₁₋₁₈ alkyl group, a C₆₋₁₈ aromatic group, a group containing a polyoxyalkylene chain, and a group containing a polyester chain as a polymeric component, a ratio of the polymerizable monomer (a1) in the polymeric component being greater than 20% by mass: 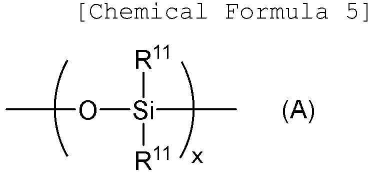
in General Formula (A) above,
R¹¹ are each independently a C₁₋₆ alkyl group, and
x indicates a number of repetition, with a number average of x being 20 or more.

In the present invention, the "polymerizable monomer" means a compound having a polymerizable unsaturated group, and examples of the polymerizable unsaturated group of the polymerizable monomer (a1) and the polymerizable monomer (a2) include C=C-containing groups such as a (meth)acryloyl group, a (meth)acryloyloxy group, a (meth)acryloylamino group, a vinyl ether group, an allyl group, a styryl group, and a maleimide group. Among these, a (meth)acryloyl group and a (meth)acryloyloxy group are preferred because of their raw material availability and good polymerization reactivity.

The polymerizable monomer may have one polymerizable unsaturated group or two or more.

In the present invention, the "polymerizable monomer" means a compound having a polymerizable unsaturated group, and examples of the polymerizable unsaturated group of the polymerizable monomer (a1) and the polymerizable monomer (a2) include C=C-containing groups such as a (meth)acryloyl group, a (meth)acryloyloxy group, a (meth)acryloylamino group, a vinyl ether group, an allyl group, a styryl group, and a maleimide group. Among these, a (meth)acryloyl group and a (meth)acryloyloxy group are preferred because of their raw material availability and good polymerization reactivity.

The polymerizable monomer may have one polymerizable unsaturated group or two or more.

In the present invention, the "polymeric component" means a component forming the polymer and does not include solvents, polymerization initiators, or the like, which do not form the polymer.

The group containing the structure represented by General Formula (A) above is preferably a group represented by General Formula (A1) below: 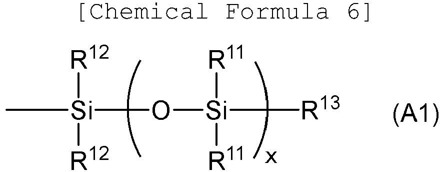
in General Formula (A1) above,
R¹¹ are each independently a C₁₋₆ alkyl group,
R¹² are each independently a C₁₋₆ alkyl group,
R¹³ is a C₁₋₆ alkyl group, and
x indicates a number of repetition, with a number average of x being 20 or more.

In General Formulae (A) and (A1) above, R¹¹, R¹², and R¹³ are each preferably a methyl group.

In General Formulae (A) and (A1) above, the number average of x in the polymer of the present invention is 20 or more, preferably in a range of 30 to 300, more preferably in a range of 40 to 200, even more preferably in a range of 50 to 150, and still even more preferably in a range of 50 to 80.

In the present invention, the "number average of x" means the average of the number of siloxane bond repeating units per polymerizable monomer for the polymerizable monomer (a1) constituting the polymer of the present invention.

The number average of x in the polymer of the present invention can be calculated from the number average molecular weight of the polymer of the present invention.

The polymerizable monomer (a1) is preferably a compound represented by General Formula (a1-1) below. 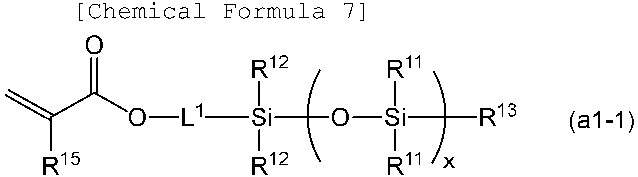
in General Formula (a1-1) above,
R¹¹, R¹², R¹³, and x are same as R¹¹, R¹², R¹³, and x in General Formulae (A) and (A1) above, respectively,
R¹⁵ is a hydrogen atom or a methyl group, and
L¹ is a divalent organic group.

The divalent organic group of L¹ is preferably a single bond, a C₁₋₃₀ alkylene group, or a C₁₋₅₀ alkyleneoxy group.

Examples of the C₁₋₃₀ alkylene group of L¹ include a methylene group, an ethylene group, a n-propylene group, a n-butylene group, a n-pentylene group, a n-hexylene group, a n-heptylene group, a n-octylene group, a n-nonylene group, a n-decylene group, a n-dodecylene group, an isopropylene group, a 2-methylpropylene group, a 2-methylhexylene group, and a tetramethylethylene group.

The C₁₋₃₀ alkylene group of L¹ is preferably a C₁₋₁₃ alkylene group, more preferably a C₁₋₃ alkylene group, and even more preferably a methylene group, an ethylene group, a n-propylene group, or an isopropylene group.

The C₁₋₃₀ alkyleneoxy group of L¹ is, for example, a group in which one -CH₂- of the alkylene group is replaced by -O-.

The C₁₋₃₀ alkyleneoxy group of L¹ is preferably a C₁₋₁₃ alkyleneoxy group, more preferably a C₁₋₈ alkyleneoxy group, even more preferably a methyleneoxy group, an ethyleneoxy group, a propyleneoxy group, an oxytrimethylene group, a butyleneoxy group, an oxytetramethylene group, a pentyleneoxy group, a heptyleneoxy group, or an octyleneoxy group.

When the divalent organic group of L¹ is the C₁₋₅₀ alkylene group or the C₁₋₃₀ alkyleneoxy group, in these divalent organic groups, part of -CH₂- may be replaced by a carbonyl group (-C(=O)-), a phenylene group, an amide bond, or a urethane bond, and further, a carbon atom may have a substituent such as a hydroxy group.

The polymerizable monomer (a1) can be produced by known methods, or commercially available products may be used.

Specific examples of the polymerizable monomer (a1) include α-(3-methacryloyloxy)propyl polydimethylsiloxane and 3-(methacryloyloxy)propyl tris(trimethylsiloxy)silane.

The polymerizable monomer (a2) is a polymerizable monomer having one or more selected from the group consisting of a C₁₋₁₈ alkyl group, a C₆₋₁₈ aromatic group, a group containing a polyoxyalkylene chain, and a group containing a polyester chain.

The C₁₋₁₈ alkyl group of the polymerizable monomer (a2) may be any of a linear alkyl group, a branched alkyl group, and a cyclic alkyl group, and specific examples thereof include a methyl group, an ethyl group, a normal-propyl group, an isopropyl group, a n-butyl group, a t-butyl group, a n-hexyl group, a cyclohexyl group, a n-octyl group, and a hexadecyl group.

The C₁₋₁₈ alkyl group of the polymerizable monomer (a2) is preferably a C₁₋₆ alkyl group.

Examples of the C₆₋₁₈ aromatic group of the polymerizable monomer (a2) include a phenyl group, a naphthyl group, an anthracen-1-yl group, and a phenanthren-1-yl group.

The group containing a polyoxyalkylene chain of the polymerizable monomer (a2) is a monovalent group containing a repeating part of oxyalkylene or a divalent linkage group containing a repeating part of oxyalkylene.

The group containing a polyester chain of the polymerizable monomer (a2) is a monovalent group containing a repeating part of an ester bond or a divalent linkage group containing a repeating part of an ester bond.

Examples of the polymerizable monomer (a2) having the C₁₋₁₈ alkyl group and having a (meth)acryloyl group as the polymerizable unsaturated group include C₁₋₁₈ alkyl esters of (meth)acrylic acid, such as methyl (meth)acrylate, ethyl (meth)acrylate, n-propyl (meth)acrylate, isopropyl (meth)acrylate, n-butyl (meth)acrylate, s-butyl (meth)acrylate, isobutyl (meth)acrylate, t-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, decyl (meth)acrylate, dodecyl (meth)acrylate, stearyl (meth)acrylate, and isostearyl (meth)acrylate; and C₁₋₁₈ bridged cyclic alkyl esters of (meth)acrylic acid, such as dicyclopentanyloxylethyl (meth)acrylate, isobornyloxylethyl (meth)acrylate, isobornyl (meth)acrylate, adamantyl (meth)acrylate, dimethyladamantyl (meth)acrylate, dicyclopentanyl (meth)acrylate, and dicyclopentenyl (meth)acrylate.

Examples of the polymerizable monomer (a2) having a C₇₋₁₈ phenylalkyl group or a C₇₋₁₈ phenoxyalkyl group and having a (meth)acryloyl group as the polymerizable unsaturated group include benzyl (meth)acrylate, phenoxymethyl (meth)acrylate, and 2-phenoxyethyl (meth)acrylate.

Examples of the polymerizable monomer (a2) having the C₁₋₁₈ alkyl group and having a vinyl ether group as the polymerizable unsaturated group include alkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, n-dodecyl vinyl ether, 2-ethylhexyl vinyl ether, and cyclohexyl vinyl ether; and cycloalkyl vinyl ethers.

Examples of the polymerizable monomer (a2) having the C₆₋₁₈ aromatic group include styrene, α-methylstyrene, p-methylstyrene, and p-methoxystyrene.

Examples of the polymerizable monomer (a2) having the C₁₋₁₈ alkyl group and having a (meth)acryloylamino group as the polymerizable unsaturated group include N,N-dimethylacrylamide, N,N-diethylacrylamide, N-isopropylacrylamide, diacetone acrylamide, and acryloylmorpholine.

Examples of the polymerizable monomer (a2) having the C₁₋₁₈ alkyl group and having a maleimide group as the polymerizable unsaturated group include methylmaleimide, ethylmaleimide, propylmaleimide, butylmaleimide, hexylmaleimide, octylmaleimide, dodecylmaleimide, stearylmaleimide, and cyclohexylmaleimide.

Examples of the polymerizable monomer (a2) having the group containing a polyoxyalkylene chain and having a (meth)acryloyl group as the polymerizable unsaturated group include polypropylene glycol mono(meth)acrylate, polyethylene glycol mono(meth)acrylate, polytrimethylene glycol mono(meth)acrylate, polytetramethylene glycol mono(meth)acrylate, poly(ethylene glycol/propylene glycol) mono(meth)acrylate, polyethylene glycol/polypropylene glycol mono(meth)acrylate, poly(ethylene glycol/tetramethylene glycol) mono(meth)acrylate, polyethylene glycol/polytetramethylene glycol mono(meth)acrylate, poly(propylene glycol/tetramethylene glycol) mono(meth)acrylate, polypropylene glycol/polytetramethylene glycol mono(meth)acrylate, poly(propylene glycol/1,2-butylene glycol) mono(meth)acrylate, polypropylene glycol/poly(1,2-butylene glycol) mono(meth)acrylate, poly(ethylene glycol/1,2-butylene glycol) mono(meth)acrylate, polyethylene glycol/poly(1,2-butylene glycol) mono(meth)acrylate, poly(tetraethylene glycol/1,2-butylene glycol) mono(meth)acrylate, polytetraethylene glycol/poly(1,2-butylene glycol) mono(meth)acrylate, poly(1,2-butylene glycol) mono(meth)acrylate, poly(ethylene glycol/trimethylene glycol) mono(meth)acrylate, polyethylene glycol/polytrimethylene glycol mono(meth)acrylate, poly(propylene glycol/trimethylene glycol) mono(meth)acrylate, polypropylene glycol/polytrimethylene glycol mono(meth)acrylate, poly(trimethylene glycol/tetramethylene glycol) mono(meth)acrylate, polytrimethylene glycol/polytetramethylene glycol mono(meth)acrylate, poly(1,2-butylene glycol/trimethylene glycol) mono(meth)acrylate, poly(1,2-butylene glycol)/polytrimethylene glycol mono(meth)acrylate, 2-hydroxyethyl (meth)acrylate, 2-hydroxypropyl (meth)acrylate, 2-hydroxybutyl (meth)acrylate, 4-hydroxybutyl (meth)acrylate, poly(1,2-butylene glycol/tetramethylene glycol) mono(meth)acrylate, and poly(1,2-butylene glycol)/polytetramethylene glycol mono(meth)acrylate.

"Poly(ethylene glycol/propylene glycol)" above means a random copolymer of ethylene glycol and propylene glycol, and "polyethylene glycol/polypropylene glycol" means a block copolymer of ethylene glycol and propylene glycol.

The polymerizable monomer (a2) is preferably one or more selected from the group consisting of a compound represented by General Formula (a2-1) below, a compound represented by General Formula (a2-2) below, a compound represented by General Formula (a2-3) below, a compound represented by General Formula (a2-4) below, and a compound represented by General Formula (a2-5) below and more preferably one or more selected from the group consisting of the compound represented by General Formula (a2-1) below, the compound represented by General Formula (a2-2) below, the compound represented by General Formula (a2-3) below, and the compound represented by General Formula (a2-4) below. 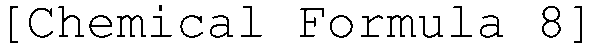 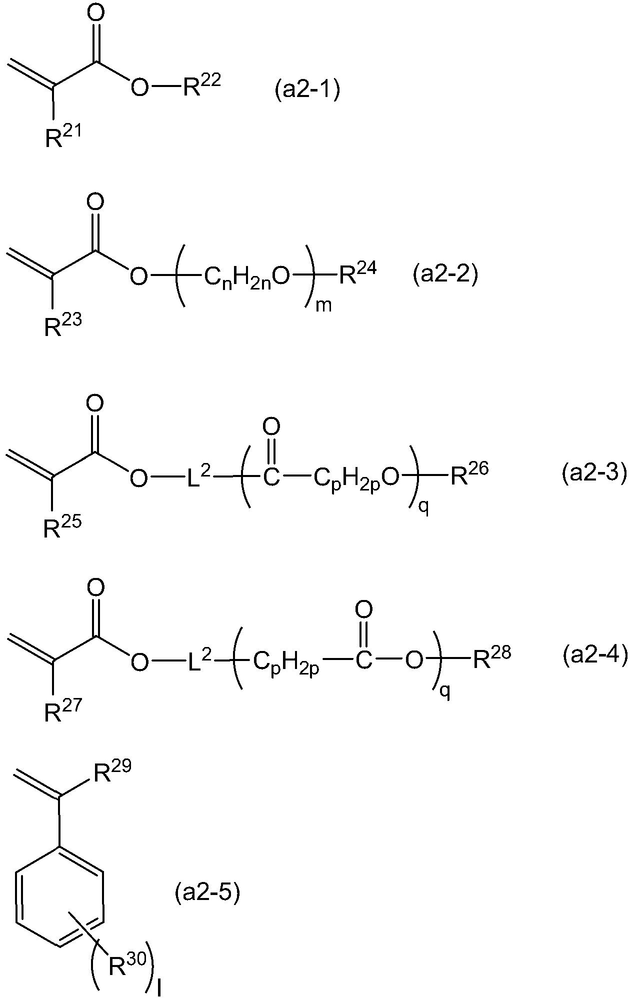
in General Formulae (a2-1), (a2-2), (a2-3), (a2-4) and (a2-5) above,
R²¹ is a hydrogen atom or a methyl group,
R²² is a C₁₋₁₈ alkyl group,
R²³ is a hydrogen atom or a methyl group,
R²⁴ is a hydrogen atom or a C₁₋₁₈ alkyl group,
R²⁵ is a hydrogen atom or a methyl group,
R²⁶ is a hydrogen atom, a C₁₋₁₈ alkyl group or a C₁₋₁₈ alkyl group having an ether bond,
R²⁷ is a hydrogen atom or a methyl group,
R²⁸ is a hydrogen atom, a C₁₋₁₈ alkyl group, or a C₁₋₁₈ alkyl group having an ether bond,
L² is a divalent organic group or a single bond,
R²⁹ is a hydrogen atom or a methyl group,
R³⁰ are each independently a C₁₋₆ alkyl group or a C₁₋₆ alkoxy group, and
n is an integer in a range of 1 to 4, m indicates a number of repetition, with a number average of m being in a range of 1 to 200, p is an integer in a range of 1 to 10, q indicates a number of repetition, with a number average of q being in a range of 1 to 100, and l is an integer in a range of 0 to 5.

In General Formula (a2-2) above, m n in parentheses may be the same or different from each other.

In General Formula (a2-3) above, q p in parentheses may be the same or different from each other.

In General Formula (a2-4) above, q p in parentheses may be the same or different from each other.

Examples of the divalent organic group of L² in General Formulae (a2-3) and (a2-4) above include the same as the divalent organic group of L¹.

The polymerizable monomer (a2) preferably contains a polymerizable monomer having a group containing a polyoxyalkylene chain, and more preferably contains a compound represented by General Formula (a2-2) above.

When the polymerizable monomer having a group containing a polyoxyalkylene chain is contained as the polymerizable monomer (a2), high compatibility with a matrix resin can be expected.

The polymerizable monomer (a2) preferably contains one or more selected from the group consisting of the compound represented by General Formula (a2-2) above, the compound represented by General Formula (a2-3) above, and the compound represented by General Formula (a2-4) above.

In the case in which one or more selected from the group consisting of the compound represented by General Formula (a2-2) above, the compound represented by General Formula (a2-3) above, and the compound represented by General Formula (a2-4) above are contained as the polymerizable monomer (a2), the total amount of the compound represented by General Formula (a2-2) above, the compound represented by General Formula (a2-3) above, and General Formula (a2-4) above is preferably 50% by mass or more with respect to the total amount of the polymerizable monomer (a2).

The polymerizable monomer (a2) can be produced by known methods.

For the polymerizable monomer (a2), commercially available products may be used. For example, examples of commercially available products of the polymerizable monomer (a2) having the group containing a polyoxyalkylene chain and having a (meth)acryloyl group as the polymerizable unsaturated group include "NK Ester M-20G," "NK Ester M-40G," "NK Ester M-90G," "NK Ester M-230G," "NK Ester AM-90G," "NK Ester AMP-10G," "NK Ester AMP-20G," and "NK Ester AMP-60G" manufactured by Shin-Nakamura Chemical Co., Ltd.; "Blemmer PE-90," "Blemmer PE-200," "Blemmer PE-350," "Blemmer PME-100," "Blemmer PME-200," "Blemmer PME-400," "Blemmer PME-4000," "Blemmer PP-1000," "Blemmer PP-500," "Blemmer PP-800," "Blemmer 70PEP-350B," "Blemmer 55PET-800," "Blemmer 50POEP-800B," "Blemmer 10PPB-500B," "Blemmer NKH-5050," "Blemmer AP-400," and "Blemmer AE-350" manufactured by NOF Corporation; the Placcell F series manufactured by Daicel Corporation; and the Viscoat series manufactured by Osaka Organic Chemical Industry Ltd.

The content ratio of the polymerizable monomer (a1) in the polymeric component (the polymerizable monomer (a1)/a total amount of the polymeric component) may be greater than 20% by mass, preferably 22% by mass or more, and more preferably 25% by mass or more. When the content ratio of polymerizable monomer (a1) in the polymeric component is in this range, excellent leveling properties can be obtained.

The upper limit of the content ratio of the polymerizable monomer (a1) in the polymeric component is not limited to a particular value, but is, for example, 90% by mass or less, preferably 70% by mass or less, more preferably 50% by mass or less, even more preferably 40% by mass or less, and still even more preferably less than 35%.

The content ratio of the polymerizable monomer (a1) can be adjusted by the raw material preparation ratio of the polymerizable monomer (a1) when the polymer of the present invention is produced.

The mass ratio between the polymerizable monomer (a1) and the polymerizable monomer (a2) in the polymeric component is, for example, the polymerizable monomer (a1):the polymerizable monomer (a2) = 21:79 to 80:20, preferably 22:78 to 60:40, and more preferably 25:75 to 50:50.

The content ratio of the group represented by General Formula (A) above in the polymer of the present invention (the sum of the masses of the groups represented by Formula (A)/the mass of the silicone chain-containing polymer) is, for example, 21 to 80% by mass, preferably 22 to 60% by mass, more preferably 25 to 50% by mass, and even more preferably 25 to 40% by mass.

The content ratio of the group represented by General Formula (A) above can be adjusted by the raw material preparation ratio of the polymerizable monomer (a1) used when the polymer of the present invention is produced.

The polymeric component contains a polymerizable monomer (a3), which is preferably a compound represented by General Formula (a3-1) below, apart from the polymerizable monomer (a1) and the polymerizable monomer (a2). By imparting hydrophilicity to the leveling agent, the developability, recoatability, and the like can be enhanced when made into a resist composition, and the recoatability and the like can be enhanced when used for a polarizing plate. 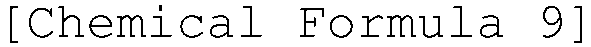 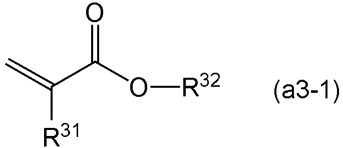
in General Formula (a3-1) above,
R³¹ is a hydrogen atom or a methyl group, and
R³² is a hydrogen atom or a C₁₋₁₈ hydroxyalkyl group.

In General Formula (a3-1) above, the C₁₋₁₈ hydroxyalkyl group is a group obtained by substituting a hydroxy group for a C₁₋₁₈ alkyl group.

The C₁₋₁₈ alkyl group may be any of a linear alkyl group, a branched alkyl group, and a cyclic alkyl group, and specific examples thereof include a methyl group, an ethyl group, a normal-propyl group, an isopropyl group, a n-butyl group, a t-butyl group, a n-hexyl group, a cyclohexyl group, a n-octyl group, and a hexadecyl group.

The C₁₋₁₈ hydroxyalkyl group is preferably a C₁₋₆ hydroxyalkyl group.

When the polymerizable monomer (a3) is contained as the polymeric component, the content ratio of the polymerizable monomer (a3) in the polymer of the present invention is, for example, in a range of 1 to 50% by mass, preferably in a range of 1 to 20% by mass, more preferably in a range of 5 to 20% by mass, and even more preferably in a range of 5 to 15% by mass of the entire amount of the polymeric component.

The silicone chain-containing polymer as the leveling agent of the present invention (hereinafter may be simply referred to as "the polymer of the present invention") is only required to be a polymer with the polymerizable monomer (a1), the polymerizable monomer (a2), and any polymerizable monomer (a3) as the polymeric component, and the polymerization type thereof is not limited to a particular type.

The polymer of the present invention may be a random copolymer of the polymerizable monomer (a1), the polymerizable monomer (a2), and any polymerizable monomer (a3) or a block copolymer of the polymerizable monomer (a1), the polymerizable monomer (a2), and any polymerizable monomer (a3), and preferably a block copolymer of the polymerizable monomer (a1), the polymerizable monomer (a2), and any polymerizable monomer (a3).

When the polymer of the present invention is, for example, a block copolymer of the polymerizable monomer (a1) and the polymerizable monomer (a2), the number and bonding order of a polymer block of the polymerizable monomer (a1) and a polymer block of the polymerizable monomer (a2) are not limited to particular ones. The block copolymer may be a diblock copolymer, in which the polymer block of the polymerizable monomer (a1) and the polymer block of the polymerizable monomer (a2) are bonded together, for example.

In the polymeric component, the polymerizable monomer (a1) may be a single polymerizable monomer (a1) or two or more polymerizable monomers (a1) having structures different from each other.

Similarly, in the polymeric component, the polymerizable monomer (a2) may be a single polymerizable monomer (a2) or two or more polymerizable monomers (a2) having structures different from each other.

Similarly, in the polymeric component, the polymerizable monomer (a3) may be a single polymerizable monomer (a3) or two or more polymerizable monomers (a3) having structures different from each other.

The polymeric component is only required to contain the polymerizable monomer (a1), the polymerizable monomer (a2), and any polymerizable monomer (a3), and may substantially contain the polymerizable monomer (a1), the polymerizable monomer (a2), and any polymerizable monomer (a3), or contain only the polymerizable monomer (a1), the polymerizable monomer (a2), and any polymerizable monomer (a3).

Here, "substantially contain" means that the total content ratio of the polymerizable monomer (a1), the polymerizable monomer (a2), and any polymerizable monomer (a3) in the polymeric component is, for example, 85% by mass or more, 90% by mass or more, 95% by mass or more, or 98% by mass or more.

The polymeric component does not contain, for example, (meth)acrylates of alkyl monoalcohols and/or (meth)acrylates of cycloalkyl monoalcohols.

Note that the number of carbon atoms of the alkyl monoalcohols is, for example, 1 to 22, and the number of carbon atoms of the cycloalkyl monoalcohols is, for example, 3 to 22.

The polymer of the present invention preferably does not contain any fluorine atoms. Being a fluorine atom-free polymer reduces accumulativeness in the environment and can reduce the load on the environment.

The polymer of the present invention preferably does not contain any reactive functional groups.

In the present invention, the "reactive functional group" is a functional group that can react with other functional groups to form a cross-linked structure or the like, and examples thereof include an isocyanate group, an epoxy group, a carboxy group, a carboxylic halide group, and a carboxylic anhydride group.

The weight average molecular weight (Mw) of the polymer of the present invention is, for example, 10,000 or more, preferably 15,000 or more, more preferably 18,000 or more, and even more preferably 20,000 or more.

The upper limit of the weight average molecular weight (Mw) of the polymer of the present invention is not limited to a particular value, and is more preferred in the order of 100,000 or less, 90,000 or less, 70,000 or less, and 50,000 or less.

The value of the weight average molecular weight (Mw) of the polymer of the present invention is measured by the method described in Examples.

### [Method for Producing Silicone Chain-Containing Polymer]

The method for producing the polymer of the present invention is not limited to a particular method, and it can be produced by known methods.

The polymer of the present invention can be produced by performing solution polymerization, bulk polymerization, emulsion polymerization, or the like on the polymeric component based on polymerization mechanisms such as radical polymerization, cationic polymerization, and anionic polymerization. For example, in the case of radical polymerization, the polymer of the present invention can be produced by charging the polymeric component into an organic solvent and adding a general-purpose radical polymerization initiator thereto.

The polymer obtained above is a random copolymer.

As the polymerization initiator, various ones can be used, and examples thereof include peroxides such as t-butylperoxy-2-ethylhexanoate, benzoyl peroxide, and diacyl peroxide; azo compounds such as azobisisobutyronitrile, dimethyl azobisisobutyrate, and phenylazotriphenylmethane; and metal chelate compounds such as Mn(acac)₃.

If necessary, a chain transfer agent such as lauryl mercaptan, 2-mercaptoethanol, ethyl thioglycolic acid, or octyl thioglycolic acid may be used, and a thiol compound having a coupling group, such as γ-mercaptopropyltrimethoxysilane, may be used as an additive for the chain transfer agent or the like.

Examples of the organic solvent include alcohols such as ethanol, isopropyl alcohol, n-butanol, iso-butanol, and tert-butanol; ketones such as acetone, methyl ethyl ketone, methyl isobutyl ketone, and methyl amyl ketone; esters such as methyl acetate, ethyl acetate, butyl acetate, methyl lactate, ethyl lactate, and butyl lactate; monocarboxylates such as 2-oxy methyl propionate, 2-oxy ethyl propionate, 2-oxy propyl propionate, 2-oxy butyl propionate, 2-methoxy methyl propionate, 2-methoxy ethyl propionate, 2-methoxy propyl propionate, and 2-methoxy butyl propionate; polar solvents such as dimethylformamide, dimethyl sulfoxide, and N-methylpyrrolidone; ethers such as methyl cellosolve, cellosolve, butyl cellosolve, butyl carbitol, and ethyl cellosolve acetate; propylene glycols and esters thereof such as propylene glycol, propylene glycol monomethyl ether, propylene glycol monomethyl ether acetate, propylene glycol monoethyl ether acetate, and propylene glycol monobutyl ether acetate; halogen-based solvents such as 1,1,1-trichloroethane and chloroform; ethers such as tetrahydrofuran and dioxane; aromatics such as benzene, toluene, and xylene; and fluorinated inert liquids such as perfluorooctane and perfluorotri-n-butylamine.

These solvents can be used alone or in combination of two or more.

As to the polymer of the present invention, preferably, addition of the polymerizable monomer (a1) to a reaction system is started, and after the start of addition of the polymerizable monomer (a1), the polymerizable monomer (a2) and the polymerization initiator are added to the reaction system to start polymerization, and the addition of the polymerizable monomer (a1) is ended prior to that of the polymerizable monomer (a2) and the polymerization initiator.

This is because polymerization of the polymer of the present invention in this manner allows for as few unreacted silicone chains as possible, thereby inhibiting coating film defects that are a concern due to additive factors during coating.

The polymerizable monomer (a1) may contain impurities of compounds having a cyclic siloxane structure, and it is recommended to remove the compounds having a cyclic siloxane structure by distilling the polymerizable monomer (a1) before adding it to the reaction system or by distilling the polymer after reaction. Distillation can be performed by known methods, and can be performed by, for example, thin film distillation.

The polymer of the present invention can also be produced by performing living polymerization such as living radical polymerization or living anionic polymerization on the polymeric component.

In the living radical polymerization, a dormant species the active polymerization end of which is protected by an atom or a group of atoms reversibly generates radicals to react with a monomer, thereby causing a growth reaction to proceed, and a growth end does not lose its activity even when a first monomer is consumed and reaction with a sequentially added second monomer takes place to obtain a block polymer. Examples of such living radical polymerization include atom transfer radical polymerization (ATRP), reversible addition-fragmentation chain transfer polymerization (RAFT), nitroxide-mediated radical polymerization (NMP), and organotellurium-mediated radical polymerization (TERP). There are no particular restrictions on which of these methods should be used, but ATRP is preferred for ease of control and other reasons. ATRP performs polymerization with an organic halide, a halogenated sulfonyl compound, or the like as a polymerization initiator and with a metallic complex formed of a transition metal compound and a ligand as a catalyst.

Specific examples of the polymerization initiator that can be used for ATRP include 1-phenylethyl chloride, 1-phenylethyl bromide, chloroform, carbon tetrachloride, 2-chloro propionitrile, α,α'-dichloroxylene, α,α'-dibromoxylene, hexakis(α-bromomethyl)benzene, and C₁₋₆ alkyl esters of C₁₋₆ 2-halogenated carboxylic acids (for example, 2-chloropropionic acid, 2-bromopropionic acid, 2-chloroisobutyric acid, 2-bromoisobutyric acid, and the like).

Specific examples of the C₁₋₆ alkyl esters of C₁₋₆ 2-halogenated carboxylic acids include methyl 2-chloropropionate, ethyl 2-chloropropionate, methyl 2-bromopropionate, and ethyl 2-bromoisobutyrate.

The transition metal compound that can be used for ATRP is represented by Mⁿ⁺Xₙ.

The transition metal Mⁿ⁺ of the transition metal compound represented by Mⁿ⁺Xₙ can be selected from the group consisting of Cu⁺, Cu²⁺, Fe²⁺, Fe³⁺, Ru²⁺, Ru³⁺, Cr²⁺, Cr³⁺, Mo⁰, Mo⁺, Mo²⁺, Mo³⁺, W²⁺, W³⁺, Rh³⁺, Rh⁴⁺, Co⁺, Co²⁺, Re²⁺, Re³⁺, Ni⁰, Ni⁺, Mn³⁺, Mn⁴⁺, V²⁺, V³⁺, Zn⁺, Zn²⁺, Au⁺, Au²⁺, Ag⁺, and Ag²⁺.

X of the transition metal compound represented by Mⁿ⁺Xₙ can be selected from the group consisting of halogen atoms, C₁₋₆ alkoxy groups, (SO₄)_{1/2}, (PO₄)_{1/3}, (HPO₄)_{1/2}, (H₂PO₄), triflate, hexafluorophosphate, methane sulfonate, aryl sulfonates (preferably benzenesulfonate or toluenesulfonate), SeR¹¹, CN, and R¹²COO. In the above, R¹¹ represents an aryl group or a linear or branched C₁₋₂₀ (preferably C₁₋₁₀) alkyl group, and R¹² represents a hydrogen atom or a linear or branched C₁₋₆ alkyl group (preferably a methyl group) that may be replaced by a halogen one to five times (preferably by fluorine or chlorine one to three times).

The n of the transition metal compound represented by Mⁿ⁺Xₙ represents formal charge on the metal and is an integer of 0 to 7.

Examples of a ligand compound that can form a coordinate bond with the transition metal of the transition metal compound include compounds having a ligand containing one or more nitrogen atoms, oxygen atoms, phosphorus atoms, and sulfur atoms that can coordinate with the transition metal via a σ bond; compounds having a ligand containing two or more carbon atoms that can coordinate with the transition metal via a π bond, and compounds having a ligand that can coordinate with the transition metal via a µ bond or a η bond.

The transition metal complex is not limited to a particular one, but preferred examples thereof include transition metal complexes of Groups 7, 8, 9, 10, and 11, and more preferred examples thereof include complexes of zero-valent copper, monovalent copper, divalent ruthenium, divalent iron, and divalent nickel.

Specific examples of the catalyst that can be used for ATRP include, when the central metal is copper, 2,2'-bipyridyl and derivatives thereof, 1,10-phenanthroline and derivatives thereof, and complexes with ligands such as polyamines such as tetramethylethylenediamine, pentamethyldiethylenetriamine, and hexamethyl tris(2-aminoethyl)amine. Examples of the divalent ruthenium complexes include dichlorotris(triphenylphosphine)ruthenium, dichlorotris(tributylphosphine)ruthenium, dichloro(cyclooctadiene)ruthenium, dichlorobenzene ruthenium, dichloro(p-cymene)ruthenium, dichloro(norbornadiene)ruthenium, cis-dichlorobis(2,2'-bipyridine)ruthenium, dichlorotris(1,10-phenanthroline)ruthenium, and carbonylchlorohydridotris(triphenylphosphine)ruthenium. Further, examples of the divalent iron complexes include bistriphenylphosphine complexes and triazacyclononane complexes.

A solvent is preferably used in living radical polymerization.

Examples of the solvent used in living radical polymerization include ester-based solvents such as ethyl acetate, butyl acetate, and propylene glycol monomethyl ether acetate; ether-based solvents such as diisopropyl ether, dimethoxyethane, and diethylene glycol dimethyl ether; halogen-based solvents such as dichloromethane and dichloroethane; aromatic solvents such as toluene and xylene; ketone-based solvents such as methyl ethyl ketone, methyl isobutyl ketone, and cyclohexanone; alcohol-based solvents such as methanol, ethanol, and isopropanol; and aprotic polar solvents such as dimethylformamide and dimethyl sulfoxide.

The solvent may be used alone or in combination of two or more.

When the polymer of the present invention is produced by living polymerization, it can be produced by any of Methods 1 to 3 described below, for example.

Method 1: A method of performing living radical polymerization (preferably atom transfer radical polymerization) of the polymerizable monomer (a1) and the polymerizable monomer (a2) in the presence of a polymerization initiator, a transition metal compound, a ligand compound that can form a coordinate bond with the transition metal, and a solvent.

Method 2: A method of performing living radical polymerization (preferably atom transfer radical polymerization) of the polymerizable monomer (a1) in the presence of a polymerization initiator, a transition metal compound, a ligand compound that can form a coordinate bond with the transition metal, and a solvent to obtain a polymer block of the polymerizable monomer (a1), and then adding the polymerizable monomer (a2) to the reaction system to further perform living radical polymerization (preferably atom transfer radical polymerization) of the polymerizable monomer (a2) to the polymer block of the polymerizable monomer (a1).

Method 3: A method of performing living radical polymerization (preferably atom transfer radical polymerization) of the polymerizable monomer (a2) in the presence of a polymerization initiator, a transition metal compound, a ligand compound that can form a coordinate bond with the transition metal, and a solvent to obtain a polymer block of the polymerizable monomer (a2), and then adding the polymerizable monomer (a1) to the reaction system to further perform living radical polymerization (preferably atom transfer radical polymerization) of the polymerizable monomer (a1) to the polymer block of the polymerizable monomer (a2).

The polymerization temperature during the living radical polymerization is preferably in a range of room temperature to 120°C.

When the polymer of the present invention is produced by living radical polymerization, there may be residual metals caused by the transition metal compound used in the polymerization in the resulting polymer. The residual metals in the resulting polymer may be removed using activated alumina or the like after the end of the polymerization.

### [Resist Composition]

The leveling agent of the present invention is suitable for resist composition applications.

Resist compositions (photoresist compositions, color resist compositions for color filters, and the like) require a high degree of leveling properties. The resist compositions are usually applied by spin coating so as to give a thickness of about 1 to 2 µm on silicon wafers or on glass substrates on which various metals are deposited. In this process, if the application film thickness fluctuates or application unevenness occurs, there arises problems in that the linearity and/or reproducibility of patterns deteriorate, and a resist pattern having desired accuracy cannot be obtained. In addition to these problems, there are various leveling-related problems such as drop marks, the entire unevenness, and the bead phenomenon, in which edges are thicker than the central part.

The resist composition of the present invention contains the leveling agent of the present invention, and the leveling agent of the present invention exhibits a high degree of leveling properties and can form a uniform coating film (cured product), and thus the resist composition of the present invention can solve the above problems.

The leveling agent of the present invention can be made into a fluorine atom-free leveling agent that does not contain any fluorine atoms, thus making it a leveling agent with low accumulativeness in the environment and a low load on the environment.

The content of the leveling agent of the present invention contained in the resist composition of the present invention, which varies depending on the type of a base resin, the method of application, a desired film thickness, or the like, is preferably 0.0001 to 10 parts by mass, more preferably 0.001 to 5 parts by mass, and even more preferably 0.01 to 2 parts by mass with respect to 100 parts by mass of the solid content of the resist composition (for example, the base resin). When the content of the leveling agent of the present invention is within the range, desired leveling properties can be obtained, and the occurrence of problems such as foaming during application can be reduced.

When the resist composition of the present invention is used as a photoresist composition, the photoresist composition contains an alkali-soluble resin, a radiosensitive substance (a photosensitive substance), a solvent, and the like in addition to the leveling agent of the present invention.

The alkali-soluble resin contained in the photoresist composition is a resin soluble in alkaline solutions, which are developers used during resist patterning.

Examples of the alkali-soluble resin include novolac resins obtained by condensing an aromatic hydroxy compound derivative such as phenol, cresol, xylenol, resorcinol, phloroglucinol, or hydroquinone and an aldehyde compound such as formaldehyde, acetaldehyde, or benzaldehyde; polymers and copolymers of vinylphenol compound derivatives such as o-vinylphenol, m-vinylphenol, p-vinylphenol, and α-methylvinylphenol; (meth)acrylic acid-based polymers and copolymers such as acrylic acid, methacrylic acid, and hydroxyethyl (meth)acrylate; polyvinyl alcohol; modified resins in which radiosensitive groups such as a quinonediazide group, a naphthoquinone azide group, an aromatic azide group, and an aromatic cinnamoyl group are introduced via part of the hydroxy groups of these various resins; and urethane resins containing acidic groups such as carboxylic acid and sulfonic acid in their molecules.

These alkali-soluble resins may be used alone or in combination of two or more.

The radiosensitive substance contained in the photoresist composition is a substance changing the solubility of the alkali-soluble resin in the developer by being irradiated with energy rays such as ultraviolet rays, far-ultraviolet rays, excimer laser light, X-rays, electron beams, ion beams, molecular beams, and gamma rays.

Examples of the radiosensitive substance include quinonediazide-based compounds, diazo-based compounds, azide-based compounds, onium salt compounds, halogenated organic compounds, mixtures of halogenated organic compounds and organometallic compounds, organic acid ester compounds, organic acid amide compounds, organic acid imide compounds, and poly(olefin sulfone) compounds.

Examples of the quinonediazide-based compounds include 1,2-benzoquinone azide-4-sulfonate, 1,2-naphthoquinone diazide-4-sulfonate, 1,2-naphthoquinone diazide-5-sulfonate, 2,1-naphthoquinone diazide-4-sulfonate, 2,1-naphthoquinone diazide-5-sulfonate, and sulfonic acid chloride of quinonediazide derivatives such as 1,2-benzoquinone azide-4-sulfonic acid chloride, 1,2-naphthoquinone diazide-4-sulfonic acid chloride, 1,2-naphthoquinone diazide-5-sulfonic acid chloride, 2,1-naphthoquinone diazide-4-sulfonic acid chloride, and 2,1-naphthoquinone diazide-5-sulfonic acid chloride.

Examples of the diazo-based compounds include salts of a condensate of p-diazodiphenylamine and formaldehyde or acetaldehyde, diazo resin inorganic salts as reaction products of hexafluorophosphate, tetrafluoroborate, perchlorate, or periodate and the above condensate, and diazo resin organic salts of reaction products of the above condensate and sulfonic acids, such as those described in United States Patent No. 3,300,309.

Examples of the azide-based compounds include azidochalconic acid, diazidobenzalmethylcyclohexanones, azidocinnamylidene acetophenones, aromatic azide compounds, and aromatic diazide compounds.

Examples of the halogenated organic compounds include halogen-containing oxadiazole-based compounds, halogen-containing triazine-based compounds, halogen-containing acetophenone-based compounds, halogen-containing benzophenone-based compounds, halogen-containing sulfoxide-based compounds, halogen-containing sulfone-based compounds, halogen-containing thiazole-based compounds, halogen-containing oxazole-based compounds, halogen-containing triazole-based compounds, halogen-containing 2-pyrone-based compounds, halogen-containing aliphatic hydrocarbon-based compounds, halogen-containing aromatic hydrocarbon-based compounds, halogen-containing heterocyclic compounds, and sulfenyl halide-based compounds.

In addition to the above, examples of the halogenated organic compounds also include compounds used as halogen-based flame retardants such as tris(2,3-dibromopropyl) phosphate, tris(2,3-dibromo-3-chloropropyl) phosphate, chlorotetrabromomethane, hexachlorobenzene, hexabromobenzene, hexabromocyclododecane, hexabromobiphenyl, tribromophenylallyl ether, tetrachlorobisphenol A, tetrabromobisphenol A, bis(bromoethyl ether)tetrabromobisphenol A, bis(chloroethyl ether)tetrachlorobisphenol A, tris(2,3-dibromopropyl) isocyanurate, 2,2-bis(4-hydroxy-3,5-dibromophenyl)propane, and 2,2-bis(4-hydroxyethoxy-3,5-dibromophenyl)propane and compounds used as organochlorinated agrochemicals such as dichlorophenyltrichloroethane.

Examples of the organic acid esters include carboxylates and sulfonates. Examples of the organic acid amides include carboxylic acid amides and sulfonic acid amides. Further, examples of the organic acid imides include carboxylic acid imides and sulfonic acid imides.

The radiosensitive substance may be used alone or in combination of two or more.

In the photoresist composition, the content of the radiosensitive substance is preferably in a range of 10 to 200 parts by mass and more preferably in a range of 50 to 150 parts by mass with respect to 100 parts by mass of the alkali-soluble resin.

Examples of the solvent for the photoresist composition include ketones such as acetone, methyl ethyl ketone, cyclohexanone, cyclopentanone, cycloheptanone, 2-heptanone, methyl isobutyl ketone, and butyrolactone; alcohols such as methanol, ethanol, n-propyl alcohol, isopropyl alcohol, n-butyl alcohol, iso-butyl alcohol, tert-butyl alcohol, pentanol, heptanol, octanol, nonanol, and decanol; ethers such as ethylene glycol dimethyl ether, ethylene glycol diethyl ether, and dioxane; alcohol ethers such as ethylene glycol monomethyl ether, ethylene glycol monoethyl ether, ethylene glycol monopropyl ether, propylene glycol monomethyl ether, propylene glycol monoethyl ether, and propylene glycol monopropyl ether; esters such as ethyl formate, propyl formate, butyl formate, methyl acetate, ethyl acetate, butyl acetate, propyl acetate, methyl propionate, ethyl propionate, propyl propionate, butyl propionate, methyl butyrate, ethyl butyrate, butyl butyrate, propyl butyrate, ethyl lactate, and butyl lactate; monocarboxylic acid esters such as methyl 2-oxypropionate, ethyl 2-oxypropionate, propyl 2-oxypropionate, butyl 2-oxypropionate, methyl 2-methoxypropionate, ethyl 2-methoxypropionate, propyl 2-methoxypropionate, and butyl 2-methoxypropionate; cellosolve esters such as cellosolve acetate, methyl cellosolve acetate, ethyl cellosolve acetate, propyl cellosolve acetate, and butyl cellosolve acetate; propylene glycols such as propylene glycol, propylene glycol monomethyl ether, propylene glycol monomethyl ether acetate, propylene glycol monoethyl ether acetate, and propylene glycol monobutyl ether acetate; diethylene glycols such as diethylene glycol monomethyl ether, diethylene glycol monoethyl ether, diethylene glycol dimethyl ether, diethylene glycol diethyl ether, and diethylene glycol methylethyl ether; halogenated hydrocarbons such as trichloroethylene, CFC solvents, HCFC, and HFC; fully fluorinated solvents such as perfluorooctane; aromatics such as toluene and xylene; and polar solvents such as dimethylacetamide, dimethylformamide, N-methylacetamide, and N-methylpyrrolidone.

These solvents may be used alone or in combination of two or more.

When the resist composition of the present invention is used as a color resist composition, the color resist composition contains an alkali-soluble resin, a polymerizable compound, a colorant, and the like in addition to the leveling agent of the present invention.

For the alkali-soluble resin contained in the color resist, the same as the alkali-soluble resin contained in the photoresist composition described above can be used.

The polymerizable compound contained in the color resist composition is a compound having a photopolymerizable functional group capable of polymerization or a crosslinking reaction by irradiation with active energy rays such as ultraviolet rays.

Examples of the polymerizable compound include unsaturated carboxylic acids such as (meth)acrylic acid, esters of a monohydroxy compound and an unsaturated carboxylic acid, esters of an aliphatic polyhydroxy compound and an unsaturated carboxylic acid, esters of an aromatic polyhydroxy compound and an unsaturated carboxylic acid, esters obtained by an esterification reaction of an unsaturated carboxylic acid, a polycarboxylic acid, and a polyhydroxy compound such as the aliphatic polyhydroxy compound or the aromatic polyhydroxy compound described above, polymerizable compounds having a urethane skeleton by reaction of a polyisocyanate compound and a (meth)acryloyl group-containing hydroxy compound, and polymerizable compounds having acid groups.

The polymerizable compound may be used alone or in combination of two or more.

Examples of the esters of an aliphatic polyhydroxy compound and an unsaturated carboxylic acid include (meth)acrylates such as ethylene glycol di(meth)acrylate, triethylene glycol di(meth)acrylate, trimethylolpropane tri(meth)acrylate, trimethylolethane tri(meth)acrylate, pentaerythritol di(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, and glycerol (meth)acrylate.

Examples thereof also include itaconates, in which the part of (meth)acrylic acid of these acrylates is replaced by itaconic acid, crotonates, in which the part is replaced by crotonic acid, and maleates, in which the part is replaced by maleic acid.

Examples of the esters of an aromatic polyhydroxy compound and an unsaturated carboxylic acid include hydroquinone di(meth)acrylate, resorcinol di(meth)acrylate, and pyrogallol tri(meth)acrylate.

The esters obtained by an esterification reaction of an unsaturated carboxylic acid, a polycarboxylic acid, and a polyhydroxy compound may be a single product or a mixture. Examples of such esters include esters obtained from (meth)acrylic acid, phthalic acid, and ethylene glycol, esters obtained from (meth)acrylic acid, maleic acid, and diethylene glycol, esters obtained from (meth)acrylic acid, terephthalic acid, and pentaerythritol, and esters obtained from (meth)acrylic acid, adipic acid, butanediol, and glycerin.

Examples of the polymerizable compounds having a urethane skeleton by reaction of a polyisocyanate compound and a (meth)acryloyl group-containing hydroxy compound include aliphatic diisocyanates such as hexamethylene diisocyanate and trimethylhexamethylene diisocyanate; alicyclic diisocyanates such as cyclohexane diisocyanate and isophorone diisocyanate; and reaction products of an aromatic diisocyanate such as tolylene diisocyanate or diphenylmethane diisocyanate and a hydroxy compound having a (meth)acryloyl group, such as 2-hydroxyethyl (meth)acrylate or 3-hydroxy-[1,1,1-tri(meth)acryloyloxymethyl]propane.

The polymerizable compounds having acid groups are, for example, esters of an aliphatic polyhydroxy compound and an unsaturated carboxylic acid and preferably multifunctional polymerizable compounds caused to have acid groups by reacting a non-aromatic carboxylic anhydride with unreacted hydroxy groups of an aliphatic polyhydroxy compound. As the aliphatic polyhydroxy compound for use in the preparation of the multifunctional polymerizable compounds, pentaerythritol or dipentaerythritol is preferred.

The acid value of the multifunctional polymerizable compounds is preferably in a range of 0.1 to 40 and more preferably in a range of 5 to 30 because of good developability, curability, and the like. When two or more multifunctional polymerizable compounds having acid groups are used in combination, and when a multifunctional polymerizable compound having acid groups and a multifunctional polymerizable compound having no acid groups are used in combination, the acid value of the mixture of the polymerizable compounds is preferably within the above range.

Specific examples of the polymerizable compounds having acid groups include a mixture mainly containing dipentaerythritol hexaacrylate, dipentaerythritol pentaacrylate, and succinate of dipentaerythritol pentaacrylate, and the mixture is commercially available as Aronix TO-1382 (manufactured by Toagosei Co., Ltd.).

Examples of polymerizable compounds other than the above include (meth)acrylamides such as ethylene bis(meth)acrylamide; allyl esters such as diallyl phthalate; and compounds having vinyl groups such as divinyl phthalate.

In the color resist composition, the content of the polymerizable compound is preferably in a range of 5 to 80% by mass, more preferably in a range of 10 to 70% by mass, and even more preferably in a range of 20 to 50% by mass of the total solid content of the color resist composition.

The colorant of the color resist composition is not limited to a particular colorant so long as it can perform coloring, and it may be a pigment or a dye, for example.

As the pigment, both organic pigments and inorganic pigments can be used. Examples of the organic pigments include pigments of various hues, such as red pigments, green pigments, blue pigments, yellow pigments, violet pigments, orange pigments, and brown pigments. Examples of the chemical structure of the organic pigments include azo-based, phthalocyanine-based, quinacridone-based, benzimidazolone-based, isoindolinone-based, dioxazine-based, indanthrene-based, and perylene-based ones. Examples of the inorganic pigments include barium sulfate, lead sulfate, titanium oxide, yellow lead, red oxide, and chromium oxide.

Note that "C.I." below means Color Index.

Examples of the red pigments include C.I. Pigment Red 1, 2, 3, 4, 5, 6, 7, 8, 9, 12, 14, 15, 16, 17, 21, 22, 23, 31, 32, 37, 38, 41, 47, 48, 48: 1, 48: 2, 48: 3, 48: 4, 49, 49: 1, 49: 2, 50: 1, 52: 1, 52: 2, 53, 53: 1, 53: 2, 53: 3, 57, 57: 1, 57: 2, 58: 4, 60, 63, 63: 1, 63: 2, 64, 64: 1, 68, 69, 81, 81: 1, 81: 2, 81: 3, 81: 4, 83, 88, 90: 1, 101, 101: 1, 104, 108, 108: 1, 109, 112, 113, 114, 122, 123, 144, 146, 147, 149, 151, 166, 168, 169, 170, 172, 173, 174, 175, 176, 177, 178, 179, 181, 184, 185, 187, 188, 190, 193, 194, 200, 202, 206, 207, 208, 209, 210, 214, 216, 220, 221, 224, 230, 231, 232, 233, 235, 236, 237, 238, 239, 242, 243, 245, 247, 249, 250, 251, 253, 254, 255, 256, 257, 258, 259, 260, 262, 263, 264, 265, 266, 267, 268, 269, 270, 271, 272, 273, 274, 275, and 276. Among these, preferred is C.I. Pigment Red 48: 1, 122, 168, 177, 202, 206, 207, 209, 224, 242, or 254, and more preferred is C.I. Pigment Red 177, 209, 224, or 254.

Examples of the green pigments include C.I. Pigment Green 1, 2, 4, 7, 8, 10, 13, 14, 15, 17, 18, 19, 26, 36, 45, 48, 50, 51, 54, 55, and 58. Among these, C.I. Pigment Green 7, 36, or 58 is preferred.

Examples of the blue pigments include C.I. Pigment Blue 1, 1: 2, 9, 14, 15, 15: 1, 15: 2, 15: 3, 15: 4, 15: 6, 16, 17, 19, 25, 27, 28, 29, 33, 35, 36, 56, 56: 1, 60, 61, 61: 1, 62, 63, 66, 67, 68, 71, 72, 73, 74, 75, 76, 78, and 79. Among these, preferred is C.I. Pigment Blue 15, 15: 1, 15: 2, 15: 3, 15: 4, or 15: 6, and C.I. Pigment Blue 15: 6 is more preferred.

Examples of the yellow pigments include C.I. Pigment Yellow 1, 1: 1, 2, 3, 4, 5, 6, 9, 10, 12, 13, 14, 16, 17, 24, 31, 32, 34, 35, 35: 1, 36, 36: 1, 37, 37: 1, 40, 41, 42, 43, 48, 53, 55, 61, 62, 62: 1, 63, 65, 73, 74, 75, 81, 83, 87, 93, 94, 95, 97, 100, 101, 104, 105, 108, 109, 110, 111, 116, 117, 119, 120, 126, 127, 127: 1, 128, 129, 133, 134, 136, 138, 139, 142, 147, 148, 150, 151, 153, 154, 155, 157, 158, 159, 160, 161, 162, 163, 164, 165, 166, 167, 168, 169, 170, 172, 173, 174, 175, 176, 180, 181, 182, 183, 184, 185, 188, 189, 190, 191, 191: 1, 192, 193, 194, 195, 196, 197, 198, 199, 200, 202, 203, 204, 205, 206, 207, and 208. Among these, preferred is C.I. Pigment Yellow 83, 117, 129, 138, 139, 150, 154, 155, 180, or 185, and more preferred is C.I. Pigment Yellow 83, 138, 139, 150, or 180.

Examples of the violet pigments include C.I. Pigment Violet 1, 1: 1, 2, 2: 2, 3, 3: 1, 3: 3, 5, 5: 1, 14, 15, 16, 19, 23, 25, 27, 29, 31, 32, 37, 39, 42, 44, 47, 49, and 50. Among these, C.I. Pigment Violet 19 or 23 is preferred, and C.I. Pigment Violet 23 is more preferred.

Examples of the orange pigments include C.I. Pigment Orange 1, 2, 5, 13, 16, 17, 19, 20, 21, 22, 23, 24, 34, 36, 38, 39, 43, 46, 48, 49, 61, 62, 64, 65, 67, 68, 69, 70, 71, 72, 73, 74, 75, 77, 78, and 79. Among these, C.I. Pigment Orange 38 or 71 is preferred.

Pixels of the three primary colors of color filters for use in liquid crystal display devices and organic electroluminescence (EL) display devices are red (R), green (G), and blue (B), and thus the red pigments, the green pigments, and the blue pigments may be used as a main component, and the organic pigments of colors such as yellow, violet, and orange may be used as hue adjustment for the purpose of improving color reproducibility.

The average particle size of the organic pigments is preferably 1 µm or less, more preferably 0.5 µm or less, and even more preferably 0.3 µm or less in order to increase the luminance of color liquid crystal display devices and organic EL display devices. To achieve these average particle sizes, it is preferable to use the organic pigments subjected to dispersion processing.

The average primary particle size of the organic pigments is preferably 100 nm or less, more preferably 50 nm or less, even more preferably 40 nm or less, and particularly preferably in a range of 10 to 30 nm.

The average particle size of the organic pigments is one measured with a dynamic light scattering particle size distribution meter, and it can be measured with, for example, Nanotrac particle size distribution analyzer "UPA-EX150," "UPA-EX250," or the like manufactured by Nikkiso Co., Ltd.

The colorant when the color resist composition is used to form a black matrix (BM) is not limited to a particular colorant so long as it is black, and examples thereof include carbon black, lamp black, acetylene black, bone black, thermal black, channel black, furnace black, graphite, iron black, and titanium black. Among these, carbon black and titanium black are preferred from the viewpoint of light-shielding rate and image characteristics.

In addition, two or more organic pigments may be mixed together, and a combination to make black by color mixing may be employed.

Examples of commercially available products of the carbon black include MA7, MA8, MA11, MA100, MA100R, MA220, MA230, MA600, #5, #10, #20, #25, #30, #32, #33, #40, #44, #45, #47, #50, #52, #55, #650, #750, #850, #950, #960, #970, #980, #990, #1000, #2200, #2300, #2350, #2400, #2600, #3050, #3150, #3250, #3600, #3750, #3950, #4000, #4010, OIL7B, OIL9B, OIL11B, OIL30B, and OIL31B manufactured by Mitsubishi Chemical Corporation; Printex 3, Printex 3OP, Printex 30, Printex 30OP, Printex 40, Printex 45, Printex 55, Printex 60, Printex 75, Printex 80, Printex 85, Printex 90, Printex A, Printex L, Printex G, Printex P, Printex U, Printex V, Printex G, SpecialBlack 550, SpecialBlack 350, SpecialBlack 250, SpecialBlack 100, SpecialBlack 6, SpecialBlack 5, SpecialBlack 4, Color Black FW1, Color Black FW2, Color Black FW2V, Color Black FW18, Color Black FW18, Color Black FW200, Color Black S160, and Color Black S170 manufactured by Evonik Degussa Japan Co., Ltd.; Monarch 120, Monarch 280, Monarch 460, Monarch 800, Monarch 880, Monarch 900, Monarch 1000, Monarch 1100, Monarch 1300, Monarch 1400, Monarch 4630, REGAL 99, REGAL 99R, REGAL 415, REGAL 415R, REGAL 250, REGAL 250R, REGAL 330, REGAL 400R, REGAL 55R0, REGAL 660R, BLACK PEARLS 480, PEARLS 130, VULCAN XC72R, and ELFTEX-8 manufactured by Cabot Japan K.K.; and RAVEN 11, RAVEN 14, RAVEN 15, RAVEN 16, RAVEN 22, RAVEN 30, RAVEN 35, RAVEN 40, RAVEN 410, RAVEN 420, RAVEN 450, RAVEN 500, RAVEN 780, RAVEN 850, RAVEN 890H, RAVEN 1000, RAVEN 1020, RAVEN 1040, RAVEN 1060U, RAVEN 1080U, RAVEN 1170, RAVEN 1190U, RAVEN 1250, RAVEN 1500, RAVEN 2000, RAVEN 2500U, RAVEN 3500, RAVEN 5000, RAVEN 5250, RAVEN 5750, and RAVEN 7000 manufactured by Columbian Carbon Co.

Among the above carbon blacks, carbon blacks coated with resin are preferred as they have high optical density and high surface resistivity required for the black matrix of color filters.

Examples of commercially available products of the titanium black include Titanium Black 10S, 12S, 13R, 13M, and 13M-C manufactured by Mitsubishi Materials Corporation.

As the colorant when used to form the black matrix (BM), two or more organic pigments may be mixed together to form black by color mixing, and examples thereof include black pigments obtained by mixing together pigments of three colors: red, green, and blue.

Examples of coloring materials that can be used in mixture in order to prepare the black pigments include Victoria Pure Blue (C.I. 42595), Auramine O (C.I. 41000), Cathilon Brilliant Flavin (Basic 13), Rhodamine 6GCP (C.I. 45160), Rhodamine B (C.I. 45170), Safranin OK70: 100 (C.I. 50240), Erioglaucine X (C.I. 42080), No. 120/Lionol Yellow (C.I. 21090), Lionol Yellow GRO (C.I. 21090), Symuler Fast Yellow 8GF (C.I. 21105), Benzidine Yellow 4T-564D (C.I. 21095), Symuler Fast Red 4015 (C.I. 12355), Lionol Red 7B4401 (C.I. 15850), Fastogen Blue TGR-L (C.I. 74160), Lionol Blue SM (C.I. 26150 ), Lionol Blue ES (C.I. Pigment Blue 15: 6), Lionogen Red GD (C.I. Pigment Red 168), and Lionol Green 2YS (C.I. Pigment Green 36).

Examples of other coloring materials that can be used in mixture in order to prepare the black pigments include C.I. Pigment Yellow 20, 24, 86, 93, 109, 110, 117, 125, 137, 138, 147, 148, 153, 154, and 166; C.I. Pigment Orange 36, 43, 51, 55, 59, and 61; C.I. Pigment Red 9, 97, 122, 123, 149, 168, 177, 180, 192, 215, 216, 217, 220, 223, 224, 226, 227, 228, and 240; C.I. Pigment Violet 19, 23, 29, 30, 37, 40, and 50; C.I. Pigment Blue 15, 15: 1, 15: 4, 22, 60, and 64; C.I. Pigment Green 7; and C.I. Pigment Brown 23, 25, and 26.

When carbon black is used as the black pigments, the average primary particle size of carbon black is preferably in a range of 0.01 to 0.08 µm and, due to good developability, more preferably in a range of 0.02 to 0.05 µm.

Carbon black differs from organic pigments and the like in particle shape, is present in a state called a structure, in which primary particles are fused together, and may form fine pores on the particle surface by posttreatment. Thus, to represent the particle shape of carbon black, it is generally preferable to measure a DBP absorption amount (JIS K6221) and a specific surface area by the BET method (JIS K6217) as indicators of the structure and the number of pores in addition to the average particle size of primary particles, which is determined by the same method as that for the organic pigments described above.

The dibutyl phthalic acid (hereinafter abbreviated as "DBP") absorption amount of carbon black is preferably in a range of 40 to 100 cm³/100 g and, due to good dispersibility and developability, more preferably in a range of 50 to 80 cm³/100 g. The specific surface area of carbon black by the BET method is preferably in a range of 50 to 120 m²/g and, due to good dispersion stability, more preferably in a range of 60 to 95 m²/g.

Examples of the dye as the colorant in the color resist composition include azo-based dyes, anthraquinone-based dyes, phthalocyanine-based dyes, quinoneimine-based dyes, quinoline-based dyes, nitro-based dyes, carbonyl-based dyes, and methine-based dyes.

Examples of the azo-based dyes include C.I. Acid Yellow 11, C.I. Acid Orange 7, C.I. Acid Red 37, C.I. Acid Red 180, C.I. Acid Blue 29, C.I. Direct Red 28, C.I. Direct Red 83, C.I. Direct Yellow 12, C.I. Direct Orange 26, C.I. Direct Green 28, C.I. Direct Green 59, C.I. Reactive Yellow 2, C.I. Reactive Red 17, C.I. Reactive Red 120, C.I. Reactive Black 5, C.I. Disperse Orange 5, C.I. Disperse Red 58, C.I. Disperse Blue 165, C.I. Basic Blue 41, C.I. Basic Red 18, C.I. Mordant Red 7, C.I. Mordant Yellow 5, and C.I. Mordant Black 7.

Examples of the anthraquinone-based dyes include C.I. Vat Blue 4, C.I. Acid Blue 40, C.I. Acid Green 25, C.I. Reactive Blue 19, C.I. Reactive Blue 49, C.I. Disperse Red 60, C.I. Disperse Blue 56, and C.I. Disperse Blue 60.

Examples of the phthalocyanine-based dyes include C.I. Pad Blue 5, examples of the quinoneimine-based dyes include C.I. Basic Blue 3 and C.I. Basic Blue 9, examples of the quinoline-based dyes include C.I. Solvent Yellow 33, C.I. Acid Yellow 3, and C.I. Disperse Yellow 64, and examples of the nitro-based dyes include C.I. Acid Yellow 1, C.I. Acid Orange 3, and C.I. Disperse Yellow 42.

For the colorant of the color resist composition, the pigment is preferably used in view of the obtained coating film having excellent lightfastness, weather resistance, and robustness, but the dye may be used in combination with the pigment as needed in order to adjust hues.

In the color resist composition, the content of the colorant is preferably 1% by mass or more, more preferably in a range of 5 to 80% by mass, and even more preferably in a range of 5 to 70% by mass of the total solid content of the color resist composition.

When the color resist composition is used to form the red (R), green (G), and blue (B) pixels of color filters, the content of the colorant in the color resist composition is preferably in a range of 5 to 60% by mass and more preferably in a range of 10 to 50% by mass of the total solid content of the color resist composition.

When the color resist composition is used to form the black matrix of color filters, the content of the colorant in the color resist composition is preferably in a range of 20 to 80% by mass and more preferably in a range of 30 to 70% by mass of the total solid content of the color resist composition.

In the color resist composition, when the colorant is the pigment, it is preferable to use it as a pigment dispersion liquid prepared by dispersing the pigment in an organic solvent using a dispersant.

Examples of the dispersant include surfactants; intermediates and derivatives of pigments; intermediates and derivatives of dyes; and resin-type dispersants such as polyamide-based resins, polyurethane-based resins, polyester-based resins, and acrylic resins. Among these, preferred are graft copolymers having nitrogen atoms, acrylic block copolymers having nitrogen atoms, and urethane resin dispersants, and the like. These dispersants have nitrogen atoms, and thus the nitrogen atoms have an affinity for the pigment surface, and the parts other than the nitrogen atoms increase their affinity for the medium, thereby improving dispersion stability.

These dispersants may be used alone or in combination of two or more.

Examples of commercially available products of the dispersant include the "Efka" series ("Efka 46" and the like) manufactured by BASF; the "Disperbyk" series and the "BYK" series ("BYK-160," "BYK-161," "BYK-2001," and the like) manufactured by BYK-Chemie Japan KK; the "Solsperse" series manufactured by Lubrizol Japan Limited; the "KP" series manufactured by Shin-Etsu Chemical Co., Ltd.; the "Polyflow" series manufactured by Kyoeisha Chemical Co., Ltd.; the "Disparlon" series by Kusumoto Chemicals, Ltd.; and the "Ajisper" series ("Ajisper PB-814" and the like) manufactured by Ajinomoto Fine-Techno Co., Inc.

Examples of the organic solvent used in the preparation of the pigment dispersion liquid include acetate-based solvents such as propylene glycol monomethyl ether acetate and propylene glycol monoethyl ether acetate; propionate-based solvents such as ethoxypropionate; aromatic solvents such as toluene, xylene, and methoxybenzene; ether-based solvents such as butyl cellosolve, propylene glycol monomethyl ether, diethylene glycol ethyl ether, and diethylene glycol dimethyl ether; ketone-based solvents such as methyl ethyl ketone, methyl isobutyl ketone, and cyclohexanone; aliphatic hydrocarbon-based solvents such as hexane; nitrogen compound-based solvents such as N,N-dimethylformamide, γ-butyrolactam, and N-methyl-2-pyrrolidone; lactone-based solvents such as γ-butyrolactone; and carbamates.

These solvents may be used alone or in combination of two or more.

Examples of the method for preparing the pigment dispersion liquid include a method including a kneading and dispersion step and a fine dispersion step for the colorant and a method including only the fine dispersion step. In the kneading and dispersion step, the colorant, part of the alkali-soluble resin, and, as needed, the dispersant are mixed and kneaded together. The colorant can be dispersed by dispersing it while applying strong shear force using a kneader.

Examples of a machine for use in kneading include two-roll mills, three-roll mills, ball mills, tron mills, Disper mixer, kneaders, co-kneaders, homogenizers, blenders, and single- or twin-screw extruders.

It is preferable to make the particle size of the colorant finer by salt milling or the like before performing the kneading.

In the fine dispersion step, the composition containing the colorant obtained in the kneading and dispersion step with a solvent added or a mixture of the colorant, the alkali-soluble resin, a solvent and, as needed, the dispersant is mixed and dispersed together with a fine particle dispersion medium of glass, zirconia or ceramic using a dispersing machine, whereby the particles of the colorant can be dispersed to a microscopic state close to primary particles.

From the viewpoint of improving the transmittance, contrast, and the like of color filters, the average particle size of the primary particles of the colorant is preferably 10 to 100 nm and more preferably 10 to 60 nm. The average particle size of the colorant is one measured with a dynamic light scattering particle size distribution meter, and it can be measured with, for example, Nanotrac particle size distribution analyzer "UPA-EX150," "UPA-EX250," or the like manufactured by Nikkiso Co., Ltd.

The above exemplifies the photoresist composition and the color resist composition as the resist composition, but they are not limiting.

### [Polarizing Plate]

The leveling agent of the present invention can also be suitably used for polarizing plate applications.

A polarizing plate generally includes a structure in which a polarizing film (a polarizing layer) obtained by dyeing a base material film made of polyvinyl alcohol with a dichroic material such as iodine or a dichroic dye and adsorbing the dichroic material to the base material film, and stretching and orienting the base material film is held between polarizing plate protective films (protective layers) such as triacetyl cellulose (TAC) films, polymethyl methacrylate (PMMA) films, polyethylene terephthalate (PET) films, and cycloolefin polymer (COP) films. The polarizing plate is further provided with a hard coat layer on the protective layers, and protected.

Any of the layers constituting the polarizing plate contains the leveling agent of the present invention, and thereby the optical properties of the polarizing plate can be improved. The hard coat layer preferably contains the leveling agent of the present invention.

The hard coat layer can be formed by curing an active energy curable resin composition, and the active energy curable composition contains an active energy ray curable resin and/or an active energy ray curable monomer.

Examples of the active energy ray curable resin include urethane (meth)acrylate resins, unsaturated polyester resins, epoxy (meth)acrylate resins, polyester (meth)acrylate resins, acrylic (meth)acrylate resins, and resins having a maleimide group. From the viewpoint of transparency, low shrinkage, and the like, urethane (meth)acrylate resins are preferred.

Note that these active energy ray curable resins may be used alone or in combination of two or more.

The urethane (meth)acrylate resin is a resin having a urethane bond and a (meth)acryloyl group, preferably obtained by reacting an aliphatic polyisocyanate compound or an aromatic polyisocyanate compound and a (meth)acrylate compound having a hydroxy group.

Examples of the aliphatic polyisocyanate compound and the aromatic polyisocyanate compound include tetramethylene diisocyanate, pentamethylene diisocyanate, hexamethylene diisocyanate, heptamethylene diisocyanate, octamethylene diisocyanate, decamethylene diisocyanate, 2-methyl-1,5-pentanediisocyanate, 3-methyl-1,5-pentanediisocyanate, dodecamethylene diisocyanate, 2-methylpentamethylene diisocyanate, 2,2,4-trimethylhexamethylene diisocyanate, 2,4,4-trimethylhexamethylene diisocyanate, isophorone diisocyanate, norbornane diisocyanate, hydrogenated diphenylmethane diisocyanate, hydrogenated tolylene diisocyanate, hydrogenated xylylene diisocyanate, hydrogenated tetramethylxylylene diisocyanate, and cyclohexyl diisocyanate. Examples of the aromatic polyisocyanate compound include tolylene diisocyanate, 4,4'-diphenylmethane diisocyanate, xylylene diisocyanate, 1,5-naphthalene diisocyanate, tridine diisocyanate, and p-phenylenediisocyanate.

Examples of the acrylate compound having a hydroxy group include mono(meth)acrylates of dihydric alcohols such as 2-hydroxyethyl (meth)acrylate, 2-hydroxypropyl (meth)acrylate, 2-hydroxybutyl (meth)acrylate, 4-hydroxybutyl (meth)acrylate, 1,5-pentanediol mono(meth)acrylate, 1,6-hexanediol mono(meth)acrylate, neopentyl glycol mono(meth)acrylate, and hydroxypivalic acid neopentyl glycol mono(meth)acrylate; mono- or di(meth)acrylates of trihydric alcohols such as trimethylolpropane di(meth)acrylate, ethoxylated trimethylolpropane (meth)acrylate, propoxylated trimethylolpropane di(meth)acrylate, glycerin di(meth)acrylate, and bis(2-(meth)acryloyloxyethyl)hydroxyethylisocyanurate or mono- and di(meth)acrylates having hydroxy groups in which some of these alcoholic hydroxy groups are modified with ε-caprolactone; compounds having a monofunctional hydroxy group and trifunctional or more multifunctional (meth)acryloyl groups such as pentaerythritol tri(meth)acrylate, ditrimethylolpropane tri(meth)acrylate, and dipentaerythritol penta(meth)acrylate or polyfunctional (meth)acrylates having hydroxy groups obtained by further modifying those compounds with ε-caprolactone; (meth)acrylate compounds having an oxyalkylene chain such as dipropylene glycol mono(meth)acrylate, diethylene glycol mono(meth)acrylate, polypropylene glycol mono(meth)acrylate, and polyethylene glycol mono(meth)acrylate; (meth)acrylate compounds having an oxyalkylene chain of a block structure such as polyethylene glycol-polypropylene glycol mono(meth)acrylate and polyoxybutylene-polyoxypropylene mono(meth)acrylate; and (meth)acrylate compounds having an oxyalkylene chain of a random structure such as poly(ethylene glycol-tetramethylene glycol) mono(meth)acrylate and poly(propylene glycol-tetramethylene glycol) mono(meth)acrylate.

The reaction of an aliphatic polyisocyanate compound or an aromatic polyisocyanate compound and an acrylate compound having a hydroxy group can be performed by known methods in the presence of a urethanization catalyst.

Specific examples of the urethanization catalyst include amines such as pyridine, pyrrole, triethylamine, diethylamine, and dibutylamine; phosphines such as triphenylphosphine and triethylphosphine; organic tin compounds such as dibutyltin dilaurate, octyltin trilaurate, octyltin diacetate, dibutyltin diacetate, and tin octylate; and organometallic compounds such as zinc octylate.

The unsaturated polyester resin is a curable resin obtained by polycondensation of one or more dibasic acids selected from the group consisting of α,β-unsaturated dibasic acids or acid anhydrides thereof, aromatic saturated dibasic acids or acid anhydrides thereof, and aliphatic or alicyclic saturated dibasic acids or acid anhydrides thereof, with glycols.

Examples of the α,β-unsaturated dibasic acids or acid anhydrides thereof include maleic acid, maleic anhydride, fumaric acid, itaconic acid, citraconic acid, chloromaleic acid, and esters of these.

Examples of the aromatic saturated dibasic acids or acid anhydrides thereof include phthalic acid, phthalic anhydride, isophthalic acid, terephthalic acid, nitrophthalic acid, tetrahydrophthalic anhydride, endomethylene tetrahydrophthalic anhydride, halogenated phthalic anhydride, and esters of these.

Examples of the aliphatic or alicyclic saturated dibasic acids include oxalic acid, malonic acid, succinic acid, adipic acid, sebacic acid, azelaic acid, glutaric acid, hexahydrophthalic anhydride, and esters of these. Examples of the glycols include ethylene glycol, propylene glycol, diethylene glycol, dipropylene glycol, 1,3-butanediol, 1,4-butanediol, 2-methylpropane-1,3-diol, neopentyl glycol, triethylene glycol, tetraethylene glycol, 1,5-pentanediol, 1,6-hexanediol, bisphenol A, hydrogenated bisphenol A, ethylene glycol carbonate, and 2,2-di-(4-hydroxypropoxydiphenyl)propane.

Examples of the epoxy vinyl ester resin include those obtained by reacting the epoxy group of epoxy resins such as bisphenol A type epoxy resins, bisphenol F type epoxy resins, phenol novolac type epoxy resins, and cresol novolac type epoxy resin with (meth)acrylic acid.

Examples of the resins having a maleimide group include bifunctional maleimide urethane compounds obtained by urethanizing N-hydroxyethylmaleimide and isophorone diisocyanate, bifunctional maleimide ester compounds obtained by esterifying maleimide acetic acid and polytetramethylene glycol, tetrafunctional maleimide ester compounds obtained by esterifying maleimidocaproic acid and a tetraethylene oxide adduct of pentaerythritol, and multifunctional maleimide ester compounds obtained by esterifying maleimidoacetic acid and polyhydric alcohol compounds.

Specific examples of the active energy ray curable monomer include ethylene glycol di(meth)acrylate, diethylene glycol di(meth)acrylate, triethylene glycol di(meth)acrylate, polyethylene glycol di(meth)acrylate with a number average molecular weight in a range of 150 to 1,000, propylene glycol di(meth)acrylate, dipropylene glycol di(meth)acrylate, tripropylene glycol di(meth)acrylate, polypropylene glycol di(meth)acrylate with a number average molecular weight in a range of 150 to 1,000, neopentyl glycol di(meth)acrylate, 1,3-butanediol di(meth)acrylate, 1,4-butanediol di(meth)acrylate, 1,6-hexanediol di(meth)acrylate, hydroxypivalate neopentyl glycol di(meth)acrylate, bisphenol A di(meth)acrylate, trimethylolpropane tri(meth)acrylate, pentaerythritol tri(meth)acrylate, dipentaerythritol hexa(meth)acrylate, pentaerythritol tetra(meth)acrylate, trimethylolpropane di(meth)acrylate, dipentaerythritol penta(meth)acrylate, dicyclopentenyl (meth)acrylate, methyl (meth)acrylate, propyl (meth)acrylate, butyl (meth)acrylate, t-butyl (meth)acrylate, 2-ethylhexyl (meth)acrylate, octyl (meth)acrylate, decyl (meth)acrylate, isodecyl (meth)acrylate, lauryl (meth)acrylate, stearyl (meth)acrylate, isostearyl (meth)acrylate, glycerol (meth)acrylate, 2-hydroxyethyl (meth)acrylate, 3-chloro-2-hydroxypropyl (meth)acrylate, glycidyl (meth)acrylate, allyl (meth)acrylate, 2-butoxyethyl (meth)acrylate, 2-(diethylamino)ethyl (meth)acrylate, 2-(dimethylamino)ethyl (meth)acrylate, γ-(meth)acryloxypropyltrimethoxysilane, 2-methoxyethyl (meth)acrylate, methoxydiethylene glycol (meth)acrylate, methoxydipropylene glycol (meth)acrylate, nonylphenoxy polyethylene glycol (meth)acrylate, nonylphenoxy polypropylene glycol (meth)acrylate, phenoxyethyl (meth)acrylate, phenoxydipropylene glycol (meth)acrylate, phenoxypolypropylene glycol (meth)acrylate, polybutadiene (meth)acrylate, polyethylene glycol-polypropylene glycol (meth)acrylate, polyethylene glycol-polybutylene glycol (meth)acrylate, polystyrylethyl (meth)acrylate, benzyl (meth)acrylate, cyclohexyl (meth)acrylate, dicyclopentanyl (meth)acrylate, dicyclopentenyl (meth)acrylate, isobornyl (meth)acrylate, methoxylated cyclodecatriene (meth)acrylate, phenyl (meth)acrylate, maleimide, N-methylmaleimide, N-ethylmaleimide, N-propylmaleimide, N-butylmaleimide, N-hexylmaleimide, N-octylmaleimide, N-dodecylmaleimide, N-stearylmaleimide, N-phenylmaleimide, N-cyclohexylmaleimide, 2-maleimidoethyl-ethyl carbonate, 2-maleimidoethyl-propyl carbonate, N-ethyl-(2-maleimidoethyl) carbamate, N,N-hexamethylenebismaleimide, polypropylene glycol-bis(3-maleimidopropyl) ether, bis(2-maleimidoethyl) carbonate, and 1,4-dimaleimidocyclohexane.

Note that these active energy ray curable monomers may be used alone or in combination of two or more.

The active energy ray curable monomer is preferably a trifunctional or more multifunctional (meth)acrylate such as trimethylolpropane tri(meth)acrylate, pentaerythritol tri(meth)acrylate, dipentaerythritol hexa(meth)acrylate, or pentaerythritol tetra(meth)acrylate.

The content of the leveling agent of the present invention in the active energy ray curable resin composition forming the hard coat layer is preferably in a range of 0.01 to 20 parts by mass, more preferably in a range of 0.1 to 15 parts by mass, and even more preferably in a range of 0.5 to 10 parts by mass with respect to 100 parts by mass of the total of the active energy ray curable resin and the active energy ray curable monomer.

Curing of the active energy ray curable resin composition can be carried out by the application of active energy rays, and the active energy rays can employ ionizing radiation such as ultraviolet rays, electron beams, α rays, β rays, and γ rays.

The active energy ray curable resin composition may contain other additives, and examples of the other additives include photoinitiators, photosensitizers, polymerization inhibitors, antistatic agents, antifoamers, viscosity adjusters, light stabilizers, weather stabilizers, heat stabilizers, antioxidants, rust inhibitors, slip agents, waxes, gloss adjusters, release agents, compatibilizers, conductivity modifiers, pigments, dyes, dispersants, and dispersion stabilizers.

The polarizing plate includes a type of polarizing plate provided with an additional antireflection layer on the hard coat layer, and the leveling agent of the present invention may be contained in the antireflection layer.

The antireflection layer is, for example, a layer obtained by curing a composition in which a low refractive index agent is further added to the active energy ray curable resin composition.

Examples of the low refractive index agent include silica fine particles having voids such as hollow silica fine particles and silica fine particles having a nanoporous structure; and metal fluoride fine particles such as magnesium fluoride, aluminum fluoride, calcium fluoride, and lithium fluoride.

The thickness of the hard coat layer or the total thickness of the hard coat layer and the antireflection layer may be set as appropriate in accordance with the purpose, and may be set, for example, in a range of 1 to 30 µm.

### [Examples]

The following specifically describes the present invention using examples and comparative examples.

The present invention is not limited to the following examples.

In the examples and the comparative examples, the weight average molecular weight (Mw) and the number average molecular weight (Mn) are values in terms of polystyrene based on gel permeation chromatography (GPC) measurement.

The GPC measurement conditions are as follows.

### [GPC Measurement Conditions]

Measurement apparatus: High-speed GPC apparatus "HLC-8320GPC" manufactured by Tosoh Corporation
Column: "TSK GUARDCOLUMN SuperHZ-L" manufactured by Tosoh Corporation + "TSK gel SuperHZM-N" manufactured by Tosoh Corporation + "TSK gel SuperHZM-N" manufactured by Tosoh Corporation + "TSK gel SuperHZM-N" manufactured by Tosoh Corporation + "TSK gel SuperHZM-N" manufactured by Tosoh Corporation.
Detector: RI (a differential refractometer)
Data processing: "EcoSEC Data Analysis version 1.07" manufactured by Tosoh Corporation
Column temperature: 40°C
Developing solvent: Tetrahydrofuran
Flow rate: 0.35 mL/minute
Sample to be measured: 7.5 mg of a sample was dissolved in 10 ml of tetrahydrofuran, and the resulting solution was filtered through a microfilter to be a sample to be measured.
Sample injection amount: 20 µl
Standard samples: The following monodisperse polystyrenes of known molecular weights were used in accordance with the measurement manual for the "HLC-8320GPC."

### (Monodisperse Polystyrenes)

"A-300" manufactured by Tosoh Corporation
"A-500" manufactured by Tosoh Corporation
"A-1000" manufactured by Tosoh Corporation
"A-2500" manufactured by Tosoh Corporation
"A-5000" manufactured by Tosoh Corporation
"F-1" manufactured by Tosoh Corporation
"F-2" manufactured by Tosoh Corporation
"F-4" manufactured by Tosoh Corporation
"F-10" manufactured by Tosoh Corporation
"F-20" manufactured by Tosoh Corporation
"F-40" manufactured by Tosoh Corporation
"F-80" manufactured by Tosoh Corporation
"F-128" manufactured by Tosoh Corporation
"F-288" manufactured by Tosoh Corporation

### (Synthesis Example 1: Synthesis of Silicone Chain-Containing Polymer (1))

A mixed liquid A1, in which 136.8 g of polypropylene glycol-polybutylene glycol-monomethacrylate (average number of repetition of propylene glycol: 1, average number of repetition of butylene glycol: 6) and 50.0 g of butyl acetate as a solvent were mixed, was prepared. A mixed liquid B1, in which 3.0 g of t-butyl peroxy-2-ethylhexanoate as an initiator and 20.0 g of butyl acetate as a solvent were mixed, was prepared. A mixed liquid C1, in which 63.2 g of a monomethacrylate compound having a polysiloxane bond represented by the following formula and 30.0 g of butyl acetate as a solvent were mixed, was prepared.

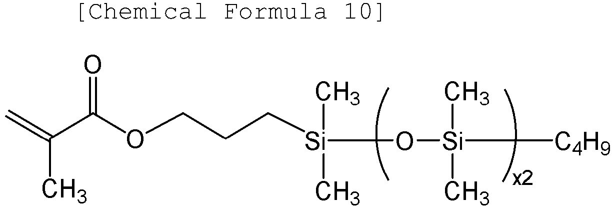

(The number average of x2 is 65.)

Into a glass flask including a stirrer, a thermometer, a cooling tube, and a dropping device, 200.0 g of butyl acetate was charged as a solvent, and the temperature was raised up to 90°C while stirring it under a nitrogen flow.

Dropping of the mixed liquid A1 at 90°C was started into this flask, and dropping of the mixed liquid B1 and the mixed liquid C1 at 90°C was started 5 minutes after the start of dropping of the mixed liquid A1. Dropping of the mixed liquid C1 was ended 120 minutes after the start of dropping, and dropping of the mixed liquids A1 and B1 was ended 10 minutes after the end of dropping of the mixed liquid C1 (135 minutes after the start of dropping of the mixed liquid A1). After the end of dropping, the mixture was stirred at 90°C for 10 hours. After the end of the reaction, the solvent was distilled off to obtain a silicone chain-containing polymer (1).

The molecular weight of the obtained silicone chain-containing polymer (1) was measured by GPC to give a weight average molecular weight (Mw) of 34,000.

Based on the raw material preparation ratio, the content ratio of the polymerizable unsaturated monomer having a silicone chain in the silicone chain-containing polymer (1) was 31.6% by mass.

### (Synthesis Example 2: Synthesis of Silicone Chain-Containing Polymer (2))

A mixed liquid A2, in which 136.8 g of propylene glycol-polybutylene glycol-monomethacrylate (average number of repetition of propylene glycol: 1, average number of repetition of butylene glycol: 6) and 102.8 g of butyl acetate as a solvent were mixed, was prepared. A mixed liquid B2, in which 3.0 g of t-butyl peroxy-2-ethylhexanoate as an initiator and 100.0 g of butyl acetate as a solvent were mixed, was prepared. A mixed liquid C2, in which 63.2 g of the same monomethacrylate compound having a polysiloxane bond as that of Synthesis Example 1 and 63.2 g of butyl acetate as a solvent were mixed, was prepared.

Into a glass flask including a stirrer, a thermometer, a cooling tube, and a dropping device, 200.0 g of butyl acetate was charged as a solvent, and the temperature was raised up to 90°C while stirring it under a nitrogen flow.

Dropping of the mixed liquid A2 at 90°C was started into this flask, and dropping of the mixed liquid B2 and the mixed liquid C2 at 90°C was started 5 minutes after the start of dropping of the mixed liquid A2. Dropping of the mixed liquid C2 was ended 120 minutes after the start of dropping, and dropping of the mixed liquids A2 and B2 was ended 10 minutes after the end of dropping of the mixed liquid C2 (135 minutes after the start of dropping of the mixed liquid A2). After the end of dropping, the mixture was stirred at 90°C for 10 hours. After the end of the reaction, the solvent was distilled off to obtain a silicone chain-containing polymer (2).

The molecular weight of the obtained silicone chain-containing polymer (2) was measured by GPC to give a weight average molecular weight (Mw) of 14,000.

Based on the raw material preparation ratio, the content ratio of the polymerizable unsaturated monomer having a silicone chain in the silicone chain-containing polymer (2) was 31.6% by mass.

### (Synthesis Comparative Example 1: Synthesis of Silicone Chain-Containing Polymer (3))

A mixed liquid A3, in which 79.0 g of polypropylene glycol-polybutylene glycol-monoacrylate (average number of repetition of propylene glycol: 1, average number of repetition of butylene glycol: 6), 5.0 g of methacrylic acid, and 35.71 g of propylene glycol monomethyl ether acetate (PGMEA) as a solvent were mixed, was prepared. A mixed liquid B3, in which 1.0 g of t-butyl peroxy-2-ethylhexanoate as an initiator and 30.0 g of PGMEA as a solvent were mixed, was prepared. A mixed liquid C3, in which 16.0 g of the same monomethacrylate compound having a polysiloxane bond as that of Synthesis Example 1 and 20.0 g of PGMEA as a solvent were mixed, was prepared.

Into a glass flask including a stirrer, a thermometer, a cooling tube, and a dropping device, 100.0 g of PGMEA was charged as a solvent, and the temperature was raised up to 90°C while stirring it under a nitrogen flow.

Dropping of the mixed liquid A3 at 90°C was started into this flask, and dropping of the mixed liquid B3 and the mixed liquid C3 at 90°C was started 5 minutes after the start of dropping of the mixed liquid A3. Dropping of the mixed liquid C3 was ended 120 minutes after the start of dropping, and dropping of the mixed liquids A3 and B3 was ended 10 minutes after the end of dropping of the mixed liquid C3 (135 minutes after the start of dropping of the mixed liquid A8). After the end of dropping, the mixture was stirred at 90°C for 5 hours, and then stirred at 110°C for 1 hour. After the end of the reaction, the solvent was distilled off to obtain a silicone chain-containing polymer (3).

The molecular weight of the obtained silicone chain-containing polymer (3) was measured by GPC to give a weight average molecular weight (Mw) of 26,000.

Based on the raw material preparation ratio, the content ratio of the polymerizable unsaturated monomer having a silicone chain in the silicone chain-containing polymer (3) was 16% by mass.

### (Synthesis Comparative Example 2: Synthesis of Silicone Chain-Containing Polymer (4))

A mixed liquid A4, in which 180.0 g of polypropylene glycol-polybutylene glycol-monoacrylate (average number of repetition of propylene glycol: 1, average number of repetition of butylene glycol: 6) and 50.0 g of propylene glycol monomethyl ether acetate (PGMEA) as a solvent were mixed, was prepared. A mixed liquid B4, in which 2.0 g of t-butyl peroxy-2-ethylhexanoate as an initiator and 30.0 g of PGMEA as a solvent were mixed, was prepared. A mixed liquid C4, in which 20.0 g of the same monomethacrylate compound having a polysiloxane bond as that of Synthesis Example 1 and 20.0 g of propylene glycol monomethyl ether acetate (PGMEA) as a solvent were mixed, was prepared.

Into a glass flask including a stirrer, a thermometer, a cooling tube, and a dropping device, 200.0 g of PGMEA was charged as a solvent, and the temperature was raised up to 85°C while stirring it under a nitrogen flow.

Dropping of the mixed liquid A4 at 85°C was started into this flask, and dropping of the mixed liquid B4 and the mixed liquid C5 at 85°C was started 5 minutes after the start of dropping of the mixed liquid A4. Dropping of the mixed liquid C4 was ended 120 minutes after the start of dropping, and dropping of the mixed liquids A4 and B4 was ended 10 minutes after the end of dropping of the mixed liquid C4 (135 minutes after the start of dropping of the mixed liquid A4). After the end of dropping, the mixture was stirred at 85°C for 5 hours, and then stirred at 110°C for 1 hour. After the end of the reaction, the solvent was distilled off to obtain a silicone chain-containing polymer (4).

The molecular weight of the obtained silicone chain-containing polymer (4) was measured by GPC to give a weight average molecular weight (Mw) of 21,000.

Based on the raw material preparation ratio, the content ratio of the polymerizable unsaturated monomer having a silicone chain in the silicone chain-containing polymer (4) was 10% by mass.

### (Synthesis Comparative Example 3: Synthesis of Silicone Chain-Containing Polymer (5))

Into a glass flask including a stirrer, a thermometer, a cooling tube, and a dropping device, 100.0 g of butyl acetate was charged as a solvent, and the temperature was raised up to 90°C while stirring it under a nitrogen flow. Next, 33.0 g of 3-methacryloyloxypropyl tris(trimethylsiloxy)silane, 67.0 g of propylene glycol-polybutylene glycol-monomethacrylate, and 70.0 g of butyl acetate as a solvent were mixed to make a mixed liquid A5. In addition, 3.0 g of t-butylperoxy-2-ethylhexanoate as an initiator and 63.3 g of butyl acetate as a solvent were mixed to make a mixed liquid B5.

The mixed liquids A5 and B5 were dropped into the glass flask at 90°C over 120 minutes. After the end of dropping, the mixture was stirred at 90°C for 5 hours, then the temperature was raised up to 110°C, and the mixture was stirred for 1 hour. After the end of the reaction, the solvent was distilled off under reduced pressure to obtain a silicone chain-containing polymer (5) as a random copolymer.

The molecular weight of the obtained silicone chain-containing polymer (5) was analyzed by GPC to give an Mw of 17,000. Based on the raw material preparation ratio, the content ratio of the polymerizable unsaturated monomer having a silicone chain in the silicone chain-containing polymer (5) was 67% by mass.

### (Synthesis Comparative Example 4: Synthesis of Silicone Chain-Containing Polymer (6))

Into a glass flask including a stirrer, a thermometer, a cooling tube, and a dropping device, 100.0 g of butyl acetate was charged as a solvent, and the temperature was raised up to 90°C while stirring it under a nitrogen flow. Next, 33.0 g of 3-methacryloyloxypropyl tris(trimethylsiloxy)silane, 67.0 g of propylene glycol-polybutylene glycol-monomethacrylate, and 70.0 g of butyl acetate as a solvent were mixed to make a mixed liquid A6. In addition, 3.0 g of t-butylperoxy-2-ethylhexanoate as an initiator and 63.3 g of butyl acetate as a solvent were mixed to make a mixed liquid B6.

The mixed liquids A and B were dropped into the glass flask at 90°C over 120 minutes. After the end of dropping, the mixture was stirred at 90°C for 5 hours, then the temperature was raised up to 110°C, and the mixture was stirred for 1 hour. After the end of the reaction, the solvent was distilled off under reduced pressure to obtain a silicone chain-containing polymer (6) as a random copolymer.

The molecular weight of the obtained silicone chain-containing polymer (5) was analyzed by GPC to give an Mw of 17,000. Based on the raw material preparation ratio, the content ratio of the polymerizable unsaturated monomer having a silicone chain in the silicone chain-containing polymer (6) was 33% by mass.

### (Example 1: Formation and Smoothness Evaluation of Coating Film)

A coating film was formed as follows using the silicone chain-containing polymer (1) produced in Synthesis Example 1.

Mixed together were 3.0 g of a resin solution with 40% by mass of an alkali-soluble resin (Acrydic ZL-295, manufactured by DIC Corporation), 1.2 g of Aronix M-402 (manufactured by Toagosei Co., Ltd., a mixture of dipentaerythritol pentaacrylate and dipentaerythritol hexaacrylate), 0.0024 g of the silicone chain-containing polymer (1) in terms of solid content, and 6.23 g of propylene glycol monomethyl ether acetate (PGMEA) to prepare a resist composition.

The obtained resist composition in an amount of 3 ml was dropped onto the central part of a 10 cm × 10 cm chrome-plated glass substrate, was spin coated under conditions of a number of revolutions of 1,000 rpm and a time of revolutions of 10 seconds, and was then heat-dried on a hot plate at 100°C for 100 seconds to produce a laminate having a coating film layer.

For the coating film layer of the produced laminate, its smoothness and coating film defects were evaluated by the following method. Table 1 lists the results.

### (Smoothness)

The coating film layer of the obtained laminate was visually observed and was evaluated for the smoothness of the coating film layer in accordance with the following criteria.
O: Almost no coating film unevenness is observed.
Δ: Coating film unevenness is partially observed.
X: Coating film unevenness is observed throughout.

### (Example 2 and Comparative Examples 1 to 4: Formation and Smoothness Evaluation of Coating Film)

The same evaluation as in Example 1 was performed except that the silicone chain-containing polymer (2) produced in Synthesis Example 2 and the silicone chain-containing polymers (3) to (6) produced in Synthesis Comparative Examples 1 to 4 were used, respectively, instead of the silicone chain-containing polymer (1). Table 1 lists the results.

**[Table 1]**

| | Ex. 1 | Ex. 2 | Comp. Ex. 1 | Comp. Ex. 2 | Comp. Ex. 3 | Comp. Ex. 4 |
|---|---|---|---|---|---|---|
| Silicone chain-containing polymer | 1 | 2 | 3 | 4 | 5 | 6 |
| Smoothness | O | O | Δ | Δ | x | Δ |

It can be seen from the results in Table 1 that even with the leveling agent of the polymer containing the monomer having a specific silicone chain, if its content does not satisfy the requirement of the present invention (greater than 20% by mass), the desired effect is not produced. It can also be seen that even with the polymer having a ratio of the monomer having a silicone chain of greater than 20% by mass, if the structure of the silicone chain does not satisfy the requirement of the present invention, the desired effect is not produced, either.

## Claims

1. A leveling agent that is a silicone chain-containing polymer with at least a polymerizable monomer (a1) having a group containing a structure represented by General Formula (A) below and a polymerizable monomer (a2) having one or more selected from the group consisting of a C₁₋₁₈ alkyl group, a C₆₋₁₈ aromatic group, a group containing a polyoxyalkylene chain, and a group containing a polyester chain as a polymeric component,
a ratio of the polymerizable monomer (a1) in the polymeric component being greater than 20% by mass: 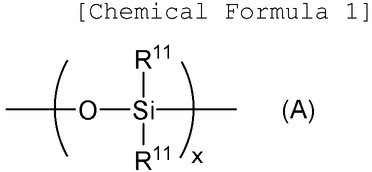
in General Formula (A) above,
R¹¹ are each independently a C₁₋₆ alkyl group, and
x indicates a number of repetition, with a number average of x being 20 or more.

2. The leveling agent according to claim 1, wherein the group containing a structure represented by General Formula (A) above is a group represented by General Formula (A1) below: 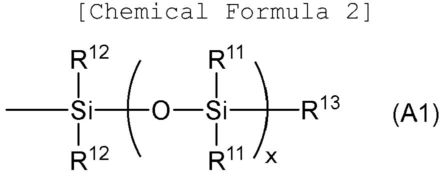
in General Formula (A1) above,
R¹¹ are each independently a C₁₋₆ alkyl group,
R¹² are each independently a C₁₋₆ alkyl group,
R¹³ is a C₁₋₆ alkyl group, and
x indicates a number of repetition, with a number average of x being 20 or more.

3. The leveling agent according to claim 1 or 2, wherein the polymerizable monomer (a1) is a compound represented by General Formula (a1-1) below: 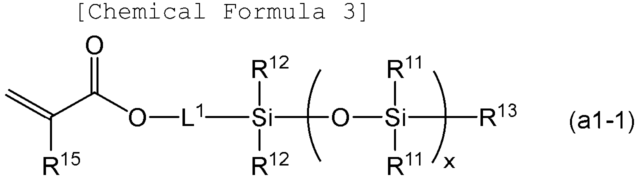
in General Formula (a1-1) above,
R11 are each independently a C₁₋₆ alkyl group,
R¹² are each independently a C₁₋₆ alkyl group,
R13 is a C₁₋₆ alkyl group,
x indicates a number of repetition, with a number average of x being 20 or more,
R¹⁵ is a hydrogen atom or a methyl group, and
L¹ is a divalent organic group.

4. The leveling agent according to claim 1 or 2, comprising a polymerizable monomer having a group containing a polyoxyalkylene chain as the polymerizable monomer (a2).

5. The leveling agent according to claim 1 or 2, wherein the polymerizable monomer (a2) is one or more selected from the group consisting of a compound represented by General Formula (a2-1) below, a compound represented by General Formula (a2-2) below, a compound represented by General Formula (a2-3) below, and a compound represented by General Formula (a2-4) below: 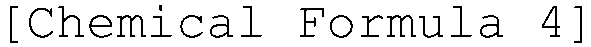 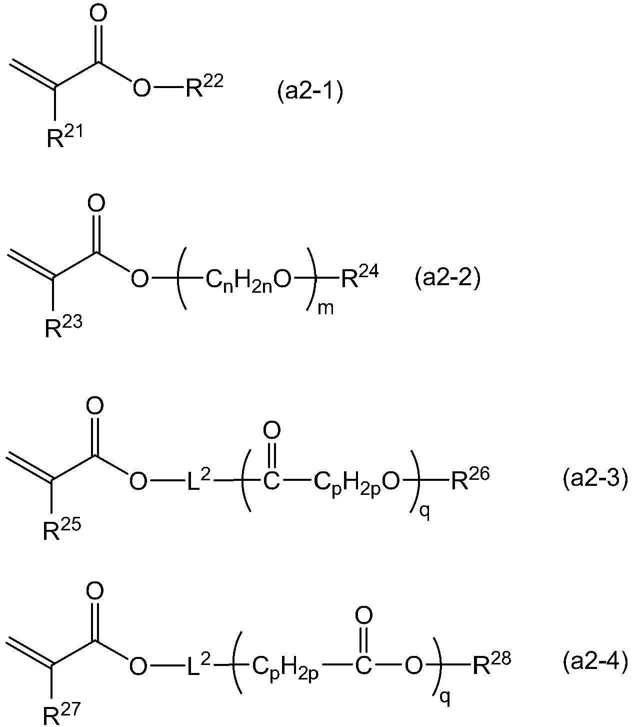
in General Formulae (a2-1), (a2-2), (a2-3), and (a2-4) above,
R²¹ is a hydrogen atom or a methyl group,
R²² is a C₁₋₁₈ alkyl group,
R²³ is a hydrogen atom or a methyl group,
R²⁴ is a hydrogen atom or a C₁₋₁₈ alkyl group,
R²⁵ is a hydrogen atom or a methyl group,
R²⁶ is a hydrogen atom, a C₁₋₁₈ alkyl group, or a C₁₋₁₈ alkyl group having an ether bond,
R²⁷ is a hydrogen atom or a methyl group,
R²⁸ is a hydrogen atom, a C₁₋₁₈ alkyl group, or a C₁₋₁₈ alkyl group having an ether bond,
L² is a divalent organic group or a single bond, and
n is an integer in a range of 1 to 4, m indicates a number of repetition, with a number average of m being in a range of 1 to 200, p is an integer in a range of 1 to 10, and q indicates a number of repetition, with a number average of q being in a range of 1 to 100.

6. The leveling agent according to claim 1 or 2, wherein the ratio of the polymerizable monomer (a1) in the polymeric component is in a range of 25 to 50% by mass.

7. The leveling agent according to claim 1 or 2, wherein the polymerizable monomer (a1) and the polymerizable monomer (a2) amount to 80% by mass or more of the polymeric component.

8. The leveling agent according to claim 1 or 2, wherein the silicone chain-containing polymer does not contain any fluorine atoms.

9. The leveling agent according to claim 1 or 2, wherein a weight average molecular weight of the silicone chain-containing polymer is 15,000 or more.

10. A resist composition comprising the leveling agent according to claim 1 or 2.

11. A polarizing plate comprising the leveling agent according to claim 1 or 2.
